(19) Europäisches Patentamt
European Patent Office
Office européen des brevets

(11) EP 3 564 331 B1

(12) EUROPEAN PATENT SPECIFICATION

(45) Date of publication and mention of the grant of the patent:
**17.11.2021 Bulletin 2021/46**

(21) Application number: **17887447.5**

(22) Date of filing: **25.12.2017**

(51) Int Cl.:
*C09D 183/04* (2006.01) *B32B 27/00* (2006.01)
*C09D 5/16* (2006.01) *C09D 7/40* (2018.01)

(86) International application number:
**PCT/JP2017/046338**

(87) International publication number:
**WO 2018/123928 (05.07.2018 Gazette 2018/27)**

# (54) ANTI-FOULING PAINT COMPOSITION, ANTI-FOULING PAINT FILM, BASE MATERIAL HAVING ANTI-FOULING PAINT FILM ATTACHED THERETO AND METHOD FOR PRODUCING SAME, AND FOULING PREVENTION METHOD

BEWUCHSHEMMENDE LACKZUSAMMENSETZUNG, BEWUCHSHEMMENDE LACKSCHICHT, BASISMATERIAL MIT BEWUCHSHEMMENDER LACKSCHICHT UND VERFAHREN ZUR HERSTELLUNG DAVON SOWIE VERFAHREN ZUR BEWUCHSHEMMUNG

COMPOSITION DE PEINTURE ANTISALISSURE, FILM DE PEINTURE ANTISALISSURE, MATÉRIAU DE BASE PORTANT LEDIT FILM DE PEINTURE ANTISALISSURE ET SON PROCÉDÉ DE PRODUCTION, ET PROCÉDÉ ANTISALISSURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2016 JP 2016255824**

(43) Date of publication of application:
**06.11.2019 Bulletin 2019/45**

(73) Proprietor: **Chugoku Marine Paints, Ltd.**
**Hiroshima 739-0652 (JP)**

(72) Inventors:
- **OSAWA, Keisuke**
  **Otake-shi**
  **Hiroshima 739-0652 (JP)**
- **TANINO, Soichiro**
  **Otake-shi**
  **Hiroshima 739-0652 (JP)**
- **FUJIKI, Yutaka**
  **Otake-shi**
  **Hiroshima 739-0652 (JP)**
- **AOI, Atsushi**
  **Otake-shi**
  **Hiroshima 739-0652 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 921 538** **WO-A1-2014/077205**
**WO-A1-2015/046262** **WO-A1-2016/190241**
**WO-A1-2016/190242** **JP-A- 2005 097 400**
**JP-A- 2008 156 511**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 564 331 B1

## Description

TECHNICAL FIELD

The present invention relates to an antifouling coating composition, and to an antifouling coating film, an antifouling substrate and production thereof, and an antifouling method using the antifouling coating composition.

BACKGROUND ART

Antifouling coating films formed from an organopolysiloxane antifouling coating composition are used widely to prevent the attachment of aquatic organisms to surfaces such as ships and underwater structures. In particular, active studies have been recently made to attain high antifouling performance even with respect to microorganisms such as slimes which are bacterial secretion films by combining an organopolysiloxane antifouling coating composition with a bioactive antifouling agent. Of such antifouling agents, pyrithione salts offer long-lasting superior antifouling properties and are thus useful. The antifouling agents are generally used in conjunction with titanium oxides which provide efficient enhancements in light resistance and hiding properties of coating films and which also allow coating films to be formed with a wide range of color hues.

For example, Patent Literature 1 describes an antifouling coating composition containing a curable organopolysiloxane and a pyrithione metal salt, and discloses an Example in which titanium oxide is further added to the antifouling coating composition. Patent Literature 1 describes titanium oxide as a generally used option, but makes no references to the surface treatment of titanium oxide. The titanium oxide used in Examples of Patent Literature 1 is "TITONE R-5N", which is a commercially available product with the surface treated with an "aluminum compound alone". In general, the surface treatment of titanium oxides for use in curable organopolysiloxane paints is widely made with an aluminum compound to avoid risks such as an increase in viscosity during storage.

CITATION LIST

PATENT LITERATURE

Patent Literature 1: WO 2014/077205

SUMMARY OF INVENTION

TECHNICAL PROBLEM

Antifouling coating films containing a curable organopolysiloxane and a pyrithione salt, such as one described in Patent Literature 1, exhibit high antifouling properties against fouling by microorganisms. Unfortunately, it has been found that if an organosiloxane antifouling coating composition containing a pyrithione salt is combined with titanium oxide that is surface-treated with an aluminum compound alone, an antifouling coating film of such a composition is deteriorated in antifouling properties particularly when applied to a surface which is frequently exposed to sunlight (see Comparative Examples 1 and 2 described later) .

SOLUTION TO PROBLEM

The present inventors carried out extensive studies in light of the circumstances discussed above, and have concluded that the deteriorations in antifouling properties probably stem from the decomposition of the pyrithione salt. The present inventors have then found that a coating composition containing a curable organopolysiloxane, a pyrithione salt, and titanium oxide which is surface-treated with a specific compound (a silicon compound, a zirconium compound or a zinc compound) can give coating films which are resistant to the decomposition of the pyrithione salt and exhibit high antifouling properties even under conditions where the coating films are frequently exposed to sunlight. The present invention has been completed based on the finding.

As described earlier, Patent Literature 1 discloses no specific embodiments which use titanium oxide surface-treated with the specific compound of the present invention.

A summary of the present invention is as follows.

[1] An organopolysiloxane antifouling coating composition comprising:

(A) a curable organopolysiloxane,
(B) a pyrithione salt, and
(C) titanium oxide,

the titanium oxide (C) being surface-treated with a compound comprising at least one selected from the group consisting of silicon compounds (C1), zirconium compounds (C2) and zinc compounds (C3).
[2] The antifouling coating composition described in 1, wherein the titanium oxide (C) is surface-treated with compounds including both a silicon compound (C1) and a zirconium compound (C2).
[3] The antifouling coating composition described in 1 or 2, wherein the pyrithione salt (B) comprises copper pyrithione.
[4] The antifouling coating composition described in any one of 1 to 3, further comprising a silicone oil (E) and/or an ether group-containing polymer (F).
[5] An antifouling coating film formed from the antifouling coating composition described in any one of 1 to 4.
[6] An antifouling substrate comprising a substrate and the antifouling coating film described in 5 on the substrate.
[7] The antifouling substrate described in 6, wherein the substrate is a ship, an underwater structure or a fishery material.
[8] A method for producing an antifouling substrate, comprising:

(1) a step of obtaining a coated substrate or an impregnated substrate by applying the antifouling coating composition described in any one of 1 to 4 to a substrate or by impregnating a substrate with the antifouling coating composition described in any one of 1 to 4, and
(2) a step of curing the paint composition by drying the coated substrate or the impregnated substrate.

[9] A method for producing an antifouling substrate, comprising:

(i) a step of forming a coating film by curing the antifouling coating composition described in any one of 1 to 4, and
(ii) a step of attaching the coating film to a substrate.

[10] An antifouling method comprising preventing a substrate from fouling by use of the antifouling coating film described in 5.
[11] A method for reducing deterioration in antifouling properties of an antifouling coating film formed from an antifouling coating composition comprising a curable organopolysiloxane (A), a pyrithione salt (B) and a titanium oxide, the method comprising:

forming the antifouling coating film from an antifouling coating composition comprising a curable organopolysiloxane (A), a pyrithione salt (B) and titanium oxide, and
wherein the titanium oxide is titanium oxide (C) surface-treated with a compound comprising at least one selected from the group consisting of silicon compounds (C1), zirconium compounds (C2) and zinc compounds (C3).

## ADVANTAGEOUS EFFECTS OF INVENTION

The antifouling coating composition provided according to the present invention can give, with a wide range of color hues, antifouling coating films which exhibit good antifouling properties even under sunlight environments and which have excellent hiding properties. The present invention further provides an antifouling coating film formed from the antifouling coating composition, an antifouling substrate coated with the antifouling coating composition, a method for producing such an antifouling substrate, an antifouling method, and a method for reducing the deterioration in antifouling properties of an antifouling coating film.
Detailed mechanisms which provide the above effects are not fully understood but are partly estimated as follows. Titanium oxide is known as a photoactive catalytic substance which exhibits a strong redox action when it absorbs UV light. If use is made of titanium oxide that is not surface-treated with a silicon compound, a zirconium compound or a zinc compound (for example, titanium oxide surface-treated with an aluminum compound alone), the photoactivated catalysis and other actions of titanium oxide will cause a decomposition of a pyrithione salt and a consequent decrease in antifouling properties. In contrast, the titanium oxide used in the present invention is surface-treated with a silicon compound, a zirconium compound or a zinc compound (the titanium oxide may be surface-treated with an aluminum compound in addition to these three compounds) and consequently will not cause a decomposition of a pyrithione salt, thus realizing good antifouling properties.

DESCRIPTION OF EMBODIMENTS

Hereinbelow, an antifouling coating composition, an antifouling coating film, an antifouling substrate and a method for producing an antifouling substrate, an antifouling method, and a method for reducing the deterioration in antifouling properties of an antifouling coating film according to the present invention will be described in detail.

[Antifouling coating compositions]

An antifouling coating composition of the present invention (hereinafter, also written simply as the "coating composition") includes a curable organopolysiloxane (A), a pyrithione salt (B) and titanium oxide (C).

(Curable polyorganosiloxanes (A))

The antifouling coating composition of the invention contains a curable organopolysiloxane (A) for the purpose of attaining enhanced antifouling properties of antifouling coating films.

For example, the curable organopolysiloxane (A) used in the invention may be one which is cured by reaction of reactive groups in the molecules thereof or reaction of its reactive groups and reactive groups in an organosilicon crosslinking agent (G) described later, thus forming a three-dimensional crosslinked structure. The reaction through which these reactive groups undergo may be, for example, condensation reaction or addition reaction. Examples of the condensation reactions include dealcoholization, deoximation and deacetonation.

The curable organopolysiloxane (A) having such reactive groups is preferably one which forms silicone rubber when cured. For example, a compound represented by the following formula (A1) is preferable.

[Chem. 1]

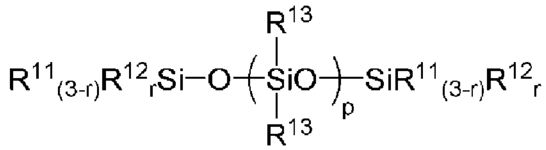

(A1)

In the formula (A1), $R^{11}$ and $R^{13}$ independently at each occurrence represent a hydrogen atom, or an alkyl group, an alkenyl group, an aryl group, an aralkyl group or an alkyl halide group wherein the number of carbon atoms ranges from 1 to 16, $R^{12}$ independently at each occurrence represents a hydroxy group or a hydrolyzable group, r represents an integer of 1 to 3, and p represents 10 to 10,000.

In the formula (A1), $R^{11}$ and $R^{13}$ independently at each occurrence represent a hydrogen atom, or an alkyl group, an alkenyl group, an aryl group, an aralkyl group or an alkyl halide group wherein the number of carbon atoms ranges from 1 to 16.

The alkyl groups represented by $R^{11}$ and $R^{13}$ are of 1 to 16 carbon atoms, with examples including methyl group, ethyl group, propyl group, butyl group, pentyl group, hexyl group and heptyl group.

The alkenyl groups represented by $R^{11}$ and $R^{13}$ are of 2 to 16 carbon atoms, with examples including vinyl group, allyl group, propenyl group, isopropenyl group, butenyl group, isobutenyl group, pentenyl group, heptenyl group, hexenyl group and cyclohexenyl group.

The aryl groups represented by $R^{11}$ and $R^{13}$ are of 6 to 16 carbon atoms and may have a substituent such as an alkyl group on the aromatic ring, with examples including phenyl group, tolyl group (methylphenyl group), xylyl group (dimethylphenyl group) and naphthyl group.

The aralkyl groups represented by $R^{11}$ and $R^{13}$ are of 7 to 16 carbon atoms, with examples including benzyl group, 2-phenylethyl group, 2-naphthylethyl group and diphenylmethyl group.

The alkyl halide groups represented by $R^{11}$ and $R^{13}$ are of 1 to 16 carbon atoms, with examples including groups resulting from the substitution of the aforementioned alkyl groups with halogen atoms such as fluorine atoms, chlorine atoms, bromine atoms and iodine atoms in place of part or all of the hydrogen atoms.

In particular, $R^{11}$ in the formula (A1) is preferably a hydrogen atom, an alkyl group, an alkenyl group or an aryl group, more preferably a methyl group, an ethyl group, a vinyl group or a phenyl group, and still more preferably a methyl group or a vinyl group.

$R^{13}$ in the formula (A1) is preferably a hydrogen atom, an alkyl group, an alkenyl group or an aryl group, more preferably a methyl group, an ethyl group, a vinyl group or a phenyl group, still more preferably a methyl group, an ethyl group or a phenyl group, and even more preferably a methyl group or a phenyl group.

The plurality of $R^{13}$ may be the same as or different from one another. When the number of $R^{11}$ is plural, the plurality of $R^{11}$ may be the same as or different from one another.

In the formula (A1), $R^{12}$ independently at each occurrence represents a hydroxy group or a hydrolyzable group.

Examples of the hydrolyzable groups represented by $R^{12}$ include oxime groups, acyloxy groups, alkoxy groups, alkenyloxy groups, amino groups, amide groups and aminooxy groups.

The oxime groups represented by $R^{12}$ preferably have a total number of carbon atoms of 1 to 10. Examples of such oxime groups include dimethyl ketoxime group, methyl ethyl ketoxime group, diethyl ketoxime group and methyl isopropyl ketoxime group.

The acyloxy groups (RC(=O)O-) represented by $R^{12}$ are preferably aliphatic acyloxy groups having a total number of carbon atoms of 1 to 10, or aromatic acyloxy groups having a total number of carbon atoms of 6 to 12. Examples thereof include acetoxy group, propionyloxy group, butyryloxy group and benzoyloxy group.

The alkoxy groups represented by $R^{12}$ preferably have a total number of carbon atoms of 1 to 10. The alkoxy groups represented by $R^{12}$ may have one or more oxygen atoms between one or more pairs of carbon atoms.

Specific examples of the alkoxy groups represented by $R^{12}$ include methoxy group, ethoxy group, propoxy group, butoxy group, methoxyethoxy group and ethoxyethoxy group.

The alkenyloxy groups represented by $R^{12}$ preferably have 3 to 10 carbon atoms. Examples of such alkenyloxy groups include isopropenyloxy group, isobutenyloxy group and 1-ethyl-2-methylvinyloxy group.

The amino groups represented by $R^{12}$ preferably have 1 to 10 carbon atoms. Examples of such amino groups include N-methylamino group, N-ethylamino group, N-propylamino group, N-butylamino group, N,N-dimethylamino group, N,N-diethylamino group and cyclohexylamino group.

The amide groups represented by $R^{12}$ preferably have a total number of carbon atoms of 2 to 10. Examples of such amide groups include N-methylacetamide group, N-ethylacetamide group and N-methylbenzamide group.

The aminoxy groups represented by $R^{12}$ preferably have a total number of carbon atoms of 2 to 10. Examples of such aminoxy groups include N,N-dimethylaminoxy group and N,N-diethylaminooxy group.

In particular, $R^{12}$ in the formula (A1) is preferably a hydroxy group, an oxime group or an alkoxy group, more preferably a hydroxy group or an oxime group, and still more preferably a hydroxy group or a 2-methyl ethyl ketoxime group.

The plurality of $R^{12}$ may be the same as or different from one another.

In the formula (A1), r represents an integer of 1 to 3.

Where $R^{12}$ is a hydroxy group, r is preferably 1. Where $R^{12}$ is a substituent other than hydroxy group, r is preferably 2.

In the formula (A1), p represents 10 to 10,000, and preferably 100 to 1,000, and may be controlled appropriately so as to satisfy the weight average molecular weight described below.

Incidentally, p means the average number of moles (the average number of repetition) of $-(SiR^{13}{}_2-O)-$.

To enhance the workability during the production of the coating composition, to improve the sprayability and curability of the coating composition, and to increase the strength of coating films formed, the weight average molecular weight (Mw) of the curable organopolysiloxane (A) is preferably not less than 500, more preferably not less than 5,000, still more preferably not less than 10,000, even more preferably not less than 15, 000, and even more preferably not less than 20, 000, and is preferably not more than 1,000,000, more preferably not more than 100,000, still more preferably not more than 50,000, and even more preferably not more than 40,000.

In the present invention, the "weight average molecular weights (Mw)" of the curable organopolysiloxane (A) and other ingredients such as an ether group-containing polymer (F) described later are measured by GPC (gel permeation chromatography) and are converted relative to standard polystyrenes of known molecular weights.

To enhance the workability during the production of the coating composition, to improve the sprayability and curability of the coating composition, and to increase the strength of coating films formed, the viscosity of the curable organopolysiloxane (A) at 23°C is preferably not less than 20 mPa ·s , more preferably not less than 100 mPa ·s , and still more preferably not less than 500 mPa ·s , and is preferably not more than 100,000 mPa ·s , more preferably not more than 10,000 mPa ·s, and still more preferably not more than 5,000 mPa ·s.

In the present specification, the viscosity of the curable organopolysiloxane (A) at 23°C is a value of viscosity measured with a B-type rotary viscometer (for example, model: BM, manufactured by TOKYO KEIKI INC.).

To increase the film strength, the content of the curable organopolysiloxane (A) in the coating composition is preferably not less than 10 mass%, more preferably not less than 20 mass%, and still more preferably not less than 30 mass%, and is preferably not more than 90 mass%, more preferably not more than 80 mass%, and still more preferably not more than 70 mass%.

The content of the curable organopolysiloxane (A) relative to the solids in the antifouling coating composition is preferably not less than 15 mass%, more preferably not less than 25 mass%, and still more preferably not less than 35 mass%, and is preferably not more than 95 mass%, more preferably not more than 85 mass%, and still more preferably not more than 75 mass%.

In the present specification, the "solids in the coating composition" are ingredients except an organic solvent

(K) described later and also except volatiles contained as solvents in the respective ingredients. The "content relative to the solids in the coating composition" may be calculated as the content in the solids obtained by drying the coating composition in a hot air dryer at 125°C for 1 hour.

The curable organopolysiloxane (A) may be a commercial product. Examples of such commercial products include "DMS-S35" manufactured by GELEST, INC., and "KE-445" manufactured by Shin-Etsu Chemical Co., Ltd. Curable organopolysiloxanes described in JP-A-2001-139816 may also be used as the ingredients (A).

(Pyrithione salts (B))

The antifouling coating composition of the present invention contains a pyrithione salt (B) for the purpose of attaining enhanced antifouling properties of antifouling coating films formed therefrom.

The pyrithione salt (B) includes a pyrithione metal salt compound represented by the following general formula (B1).

[Chem. 2]

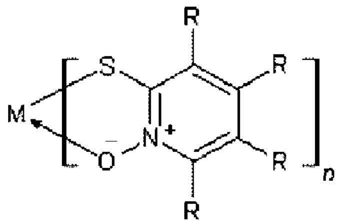

(B 1)

In the formula (B1), R independently at each occurrence represents hydrogen, a C1-C6 alkyl group, a C1-C6 cycloalkyl group, a C2-C6 alkenyl group, a C6 aryl group, a C1-C6 alkoxy group or a C1-C6 alkyl halide group, M represents a metal which is Cu, Zn, Na, Mg, Ca, Ba, Fe or Sr, and n represents the valence of the metal M.

From the points of view of antifouling properties and the availability of raw materials, it is preferable that Rs in the formula (B1) be all hydrogen.

To ensure that antifouling coating films will exhibit good antifouling properties, M in the formula (B1) is preferably Cu or Zn, and is more preferably Cu. The valence n is preferably 2.

Two or more pyrithione salts (B), for example, those having Cu and Zn as the metals M, may be used in combination.

To enhance the application workability of the antifouling coating composition and the antifouling properties of antifouling coating films, the content of the pyrithione salt (B) in the coating composition is preferably not less than 0.1 mass%, more preferably not less than 1 mass%, and still more preferably not less than 3 mass%, and is preferably not more than 40 mass%, more preferably not more than 20 mass%, and still more preferably not more than 15 mass%.

The content of the pyrithione salt (B) relative to the solids in the antifouling coating composition is preferably not less than 0.2 mass%, more preferably not less than 1.5 mass%, and still more preferably not less than 5 mass%, and is preferably not more than 60 mass%, more preferably not more than 30 mass%, and still more preferably not more than 20 mass%.

(Titanium oxide (C))

The antifouling coating composition of the present invention contains titanium oxide (C) for the purpose of increasing the light resistance and hiding properties of antifouling coating films.

The titanium oxide (C) used in the present invention is surface-treated with a compound comprising at least one selected from the group consisting of silicon compounds (C1), zirconium compounds (C2) and zinc compounds (C3).

The surface treatment on the titanium oxide (C) is to cover the surface of titanium oxide particles with the specific compound, and generally provides enhancements in properties such as the dispersibility of titanium oxide into the resin binder, and the light resistance and aesthetic appearance of coating films.

For example, the surface treatment on the titanium oxide (C) may be performed by the method described in JP-A-H03-23221, JP-A-H06-49388, JP-A-H06-345438, JP-A-H07-292276, JP-A-H07-292277, JP-A-H09-48931, JP-A-H09-124968, JP-A-H10-158015 or JP-A-2001-2417.

Examples of the silicon compounds (C1) for use in the surface treatment include silica, hydrous silica, sodium silicate, potassium silicate and polysiloxane.

When the titanium oxide (C) is surface-treated with the silicon compound (C1), the amount is preferably 0.1 to

10 mass%, and more preferably 0.3 to 5 mass% in terms of silicon oxide as the silicon compound relative to the titanium oxide (C) taken as 100 mass%.

Examples of the zirconium compounds (C2) for use in the surface treatment include zirconium chloride, zirconium oxychloride, zirconium sulfate, zirconium nitrate and zirconium acetate.

When the titanium oxide (C) is surface-treated with the zirconium compound (C2), the amount is preferably 0.1 to 10 mass%, and more preferably 0.3 to 5 mass% in terms of zirconium oxide as the zirconium compound relative to the titanium oxide (C) taken as 100 mass%.

Examples of the zinc compounds (C3) for use in the surface treatment include zinc chloride and zinc acetate.

When the titanium oxide (C) is surface-treated with the zinc compound (C3), the amount is preferably 0.1 to 10 mass%, and more preferably 0.3 to 5 mass% in terms of zinc oxide as the zinc compound relative to the titanium oxide (C) taken as 100 mass%.

The titanium oxide (C) may be surface treated with a further compound in addition to the silicon compound (C1), the zirconium compound (C2) and the zinc compound (C3). Examples of such additional compounds include aluminum compounds, antimony compounds, tin compounds, cerium compounds, iron compounds, sulfur compounds, fluorine compounds, phosphate esters, alcohols and organic acids.

The surface treatment agent on the titanium oxide (C) may be analyzed using analytical techniques such as X-ray diffractometry. For example, the compound on the surface of titanium oxide may be identified by X-ray diffractometry based on the diffraction pattern, and the amounts of elements may be determined by fluorescent X-ray analysis. Incidentally, the titanium oxide (C) may be isolated from the antifouling coating composition by a combination of techniques such as centrifugation, filtration and washing, and the surface treatment agent on the titanium oxide may be analyzed.

The titanium oxide (C) may be of rutile type, anatase type or brookite type. Rutile type titanium oxide is preferable because of its stability.

The average particle size of the titanium oxide (C) is not limited. From the points of view of the hiding properties of antifouling coating films and the application workability of the antifouling coating composition, the average particle size is preferably 0.01 to 10 μm, and more preferably 0.05 to 5 μm.

The average particle size of the titanium oxide (C) is that of particles including the surface treatment agent. The average particle size of the titanium oxide (C) may be measured by a laser diffraction/scattering method or the like, or may be determined based on an electron micrograph.

The titanium oxide (C) may be one produced by the sulfate process or the chloride process.

To enhance the application workability of the antifouling coating composition and to improve the antifouling properties of antifouling coating films, the content of the titanium oxide (C) in the coating composition is preferably not less than 0.3 mass%, and more preferably not less than 1 mass%, and is preferably not more than 30 mass%, and more preferably not more than 10 mass%.

The content of the titanium oxide (C) relative to the solids in the antifouling coating composition is preferably not less than 0.5 mass%, and more preferably not less than 1.5 mass%, and is preferably not more than 40 mass%, more preferably not more than 20 mass%, and still more preferably not more than 15 mass%.

(Optional ingredients)

In addition to the curable organopolysiloxane (A), the pyrithione salt (B) and the titanium oxide (C), the antifouling coating composition of the present invention may include optional ingredients as required such as an inorganic filler (D), a silicone oil (E), an ether group-containing polymer (F), an organosilicon crosslinking agent (G), a curing catalyst (H), a dehydrating agent (I), an additional coloring pigment (J), an organic solvent (K), a silane coupling agent (L), an additional antifouling agent (M), an anti-sagging/ anti-settling agent (N), and an enzyme (O).

[Inorganic fillers (D)]

The antifouling coating composition of the present invention may contain an inorganic filler (D) other than the titanium oxide (C), for the purpose of attaining enhanced fluidity and thixotropy of the coating composition.

When the antifouling coating composition of the invention contains the inorganic filler (D), the fluidity and thixotropy of the antifouling coating composition are enhanced as described above. Consequently, the coating composition can form a sufficiently thick coating film with a small number of coating operations even on a vertical surface or the like. Further, the properties of coating films obtained such as hardness, tensile strength and elongation are improved in a well-balanced manner.

Examples of the inorganic fillers (D) include silica, mica, calcium carbonate, aluminum carbonate, magnesium carbonate, barium carbonate, aluminum oxide, aluminum hydroxide, aluminum silicate, magnesium silicate, potassium feldspar, zinc oxide, kaolin, alumina white, barium sulfate, calcium sulfate, zinc sulfide and glass short fibers. The inorganic fillers may be used singly, or two or more may be used in combination.

In particular, silica is preferable as the inorganic filler (D) because the properties of coating films such as hardness, tensile strength and elongation are enhanced with a good balance.

For example, the silica may be hydrophilic silica (surface-untreated silica) such as wet-process silica (hydrated silica) or dry-process silica (fumed silica or anhydrous silica). Further, use may be made of hydrophobic silica obtained by hydrophobizing the surface of the above silica, specifically, hydrophobic wet silica, hydrophobic fumed silica or the like. The silicas may be used singly, or two or more may be used in combination.

While the wet-process silica is not particularly limited, for example, it is preferable that the wet-process silica have an adsorbed water content of 4 to 8 mass%, a bulk density of 200 to 300 g/L, a primary particle size of 10 to 30 μm, and a specific surface area (a BET surface area) of not less than 10 $m^2/g$.

While the dry-process silica is not particularly limited, for example, it is preferable that the dry-process silica have a water content of not more than 1.5 mass%, a bulk density of 50 to 100 g/L, a primary particle size of 8 to 20 μm, and a specific surface area of not less than 10 $m^2/g$.

Examples of the hydrophobic fumed silicas include those obtained by surface treatment of dry-process silica with an organosilicon compound such as methyltrichlorosilane, dimethyldichlorosilane, hexamethyldisilazane, hexamethylcyclotrisiloxane or octamethylcyclotetrasiloxane. The hydrophobic fumed silica does not adsorb much water with the passage of time, and the water content thereof is preferably not more than 0.3 mass%, and more preferably 0.1 to 0.2 mass%.

While the hydrophobic fumed silica is not particularly limited, for example, it is preferable that the hydrophobic fumed silica have a primary particle size of 5 to 50 nm, a bulk density of 50 to 100 g/L, and a specific surface area of not less than 10 $m^2/g$. When the hydrophobic fumed silica is subjected to heat treatment described later, the hydrophobic fumed silica after the heat treatment may have a reduced content of water adsorbed on the surface. In such a case, the water content of the hydrophobic fumed silica is preferably not more than 0.2 mass%, more preferably not more than 0.1 mass%, and still more preferably 0.05 to 0.1 mass%.

The silica may be a commercial product. Examples of such commercial products include "AEROSIL R974", "AEROSIL RX200" and "AEROSIL 200" manufactured by Nippon Aerosil Co., Ltd. Further, silicas described in JP-A-2001-139816 may also be used.

The silica may be heat treated beforehand together with the curable organopolysiloxane (A). In other words, the silica may be added to the coating composition in the form of a heat-treated product of the silica and the curable organopolysiloxane (A). The preliminary heat treatment of the silica with part or all of the curable organopolysiloxane (A) enhances the compatibility of the two ingredients and offers advantageous effects such as suppressed aggregation of the silica.

For example, the heat treatment of the silica and the curable organopolysiloxane (A) may be performed under atmospheric or reduced pressure, preferably at a temperature of not less than 100°C and not more than the decomposition temperature of the ingredients, more preferably at 100 to 300°C, and still more preferably at 140 to 200°C, preferably for 3 to 30 hours.

The silica may be added to the coating composition in the form of a kneadate with the curable organopolysiloxane (A). By using a kneadate of the curable organopolysiloxane (A) and the silica, the viscosity of the coating composition is prevented from being excessively high.

For example, the silica and the curable organopolysiloxane (A) may be kneaded by the method described in JP-A-2004-182908.

To enhance the thixotropy of the coating composition and to increase the film strength and the film hardness, the amount of the inorganic filler (D) added to the coating composition of the invention is preferably not less than 0.5 parts by mass, more preferably not less than 1 part by mass, still more preferably not less than 2 parts by mass, even more preferably not less than 3 parts by mass, even more preferably not less than 4 parts by mass, even more preferably not less than 5 parts by mass, even more preferably not less than 6 parts by mass, and even more preferably not less than 7 parts by mass based on 100 parts by mass of the curable organopolysiloxane (A). To prevent an excessive increase in the viscosity of the coating composition, the amount of the inorganic filler (D) is preferably not more than 100 parts by mass, more preferably not more than 50 parts by mass, and still more preferably not more than 20 parts by mass on the same basis as described above .

[Silicone oils (E)]

The antifouling coating composition of the present invention may contain a silicone oil (E) for the purpose of attaining enhanced antifouling properties of antifouling coating films formed therefrom.

The silicone oil (E) is preferably a silicone oil represented by the following formula (E1).

[Chem. 3]

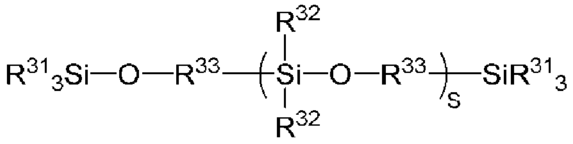

(E1)

In the formula (E1), $R^{31}$ and $R^{32}$ independently at each occurrence represent a hydrogen atom, or a C1-C50 alkyl, alkenyl, aryl, aralkyl or alkyl halide group which may optionally have a heteroatom in the structure; $R^{33}$ independently at each occurrence represents a single bond, or a C1-C50 divalent hydrocarbon group which may be optionally interrupted with an amino group, an ether group, a thioether group, an ester group or an amide group; and s represents an integer of 10 to 1,000.

In the present invention, the term "hydrocarbon group" means a group which is composed of carbon and hydrogen alone and contains no other elements such as, for example, oxygen, sulfur, phosphorus and nitrogen unless otherwise mentioned.

When $R^{31}$ and $R^{32}$ represent C1-C50 alkyl, alkenyl, aryl, aralkyl or alkyl halide groups, they may each independently contain a heteroatom in the structure, that is, may each independently contain a heteroatom-containing group in the structure. Examples of the heteroatoms include oxygen, nitrogen and sulfur. Examples of the heteroatom-containing groups include amino groups, amide groups, ether groups, ester groups, alcohol groups, carboxy groups, thioether groups and thiol groups.

The plurality of $R^{31}$, and the plurality of $R^{32}$ may be each the same as or different from one another.

A preferred silicone oil (E) is one in which $R^{31}$ and $R^{32}$ are all alkyl groups or are alkyl and aryl groups.

The silicone oil (E) in which $R^{31}$ and $R^{32}$ are all alkyl groups is preferably such that the plurality of $R^{31}$ and the plurality of $R^{32}$ are all methyl groups (hereinafter, such silicone oils will be written as the "(unmodified) polydimethylsiloxanes") or are a methyl group(s) and other alkyl group (s) wherein the other alkyl group (s) preferably has an ether group. Examples of the alkyl groups having an ether group include those having a chemical structure represented by $-R(C_2H_4O)_a(C_3H_6O)_bR'$ (wherein R represents a C1-C20 alkylene group, R' represents a C1-C20 alkyl group, a and b represent integers of 0 to 30, and a + b is an integer of 1 or greater) . Those silicone oils (E) in which $R^{31}$ and $R^{32}$ are a methyl group (s) and an ether group-containing alkyl group(s) will be hereinafter written as the "etherified polydimethylsiloxanes".

The silicone oil (E) in which $R^{31}$ and $R^{32}$ are alkyl and aryl groups is preferably such that $R^{31}$ and $R^{32}$ are methyl and phenyl groups (hereinafter, such silicone oils will be also written as the "phenylated polydimethylsiloxanes) and is more preferably such that the proportion of phenyl groups (the phenylation ratio) relative to all $R^{31}$ and $R^{32}$ is 3 to 50%.

In the formula (E1), $R^{33}$ independently at each occurrence represents a single bond, or a C1-C50 divalent hydrocarbon group which may be optionally interrupted with an amino group, an ether group, a thioether group, an ester group or an amide group.

The plurality of $R^{33}$ may be the same as or different from one another.

$R^{33}$ is preferably a single bond. When $R^{33}$ represents a C1-C50 divalent hydrocarbon group interrupted with an ether group, the chemical structure thereof may be represented by, for example, $-R(C_2H_4O)_a(C_3H_6O)_bR''-$ (wherein R and R" each independently represent a C1-C10 alkylene group, a and b represent integers of 0 to 30, and a + b is an integer of 1 or greater).

To enhance the workability during the production of the coating composition and to attain enhancements in the sprayability and curability of the paint composition and enhancements in the strength of coating films formed, the viscosity of the silicone oil (E) at 23°C is preferably not less than 10 mPa ·s, more preferably not less than 20 mPa ·s, still more preferably not less than 40 mPa ·s, even more preferably not less than 60 mPa ·s, and even more preferably not less than 80 mPa ·s, and is preferably not more than 10,000 mPa ·s, more preferably not more than 5,000 mPa ·s, and still more preferably not more than 4,000 mPa ·s.

In the present specification, the viscosity of the silicone oil (E) at 23°C is a value of viscosity measured with a B-type rotary viscometer.

The antifouling coating composition of the invention may contain one, or two or more kinds of silicone oils (E).

To enhance the antifouling properties of antifouling coating films formed, the amount of the silicone oil (E) added to the antifouling coating composition of the invention is preferably not less than 0.1 mass%, more preferably not less than 1 mass%, and still more preferably not less than 3 mass%, and is preferably not more than 50 mass%, more preferably not more than 40 mass%, and still more preferably not more than 30 mass%, relative to the solids in the coating composition containing the silicone oil (E).

The silicone oil (E) may be a commercial product. Examples of such commercially available products include

(unmodified) polydimethylsiloxane "KF-96-1,000 cs" (manufactured by Shin-Etsu Chemical Co., Ltd.), phenylated polydimethylsiloxane "KF-50-1,000 cs" (manufactured by Shin-Etsu Chemical Co., Ltd., phenylation ratio: 5%, kinematic viscosity (25°C): 1,000 $mm^2/s$), and etherified polydimethylsiloxanes "X-22-4272" (manufactured by Shin-Etsu Chemical Co., Ltd., an etherified polydimethylsiloxane in which some $R^{31}$ are ether group-containing alkyl groups), "KF-6020" (manufactured by Shin-Etsu Chemical Co., Ltd., an etherified polydimethylsiloxane in which some $R^{32}$ are ether group-containing alkyl groups, kinematic viscosity (25°C) : 180 $mm^2/s$), and "FZ-2203" (manufactured by Dow Corning Toray Co., Ltd., a polydimethylsiloxane in which some $R^{33}$ are ether group-containing alkylene groups).

[Ether group-containing polymers (F)]

The antifouling coating composition of the present invention may contain an ether group-containing polymer (F) for the purpose of attaining enhanced antifouling properties of antifouling coating films.

The ether group-containing polymer (F) is a polymer which contains structural units derived from an unsaturated monomer (f1) represented by the following formula (F1).

[Chem. 4]

$$H_2C{=}CR^1{-}X{-}\left[(R^2O)_m(R^3O)_n\right]{-}R^4 \quad (F1)$$

In the formula (F1), $R^1$ represents a hydrogen atom or a C1-C10 monovalent hydrocarbon group, $R^2$ represents an ethylene group or a propylene group, $R^3$ represents a C4-C10 divalent hydrocarbon group, $R^4$ represents a hydrogen atom or a C1-C30 monovalent hydrocarbon group, m represents an integer of 1 to 50, n represents an integer of 0 to 50, and X represents an ester bond, an amide bond or a single bond.

In the formula (F1), $R^1$ represents a hydrogen atom or a C1-C10 monovalent hydrocarbon group. Examples of the monovalent hydrocarbon groups include alkyl groups such as methyl group and ethyl group; alkenyl groups such as ethylene group and propylene group; aryl groups such as phenyl group; and aralkyl groups such as benzyl group. Alkyl groups are preferable. The number of carbon atoms in the monovalent hydrocarbon group is preferably 1 to 6, more preferably 1 to 4, still more preferably 1 or 2, and particularly preferably 1 (that is, the monovalent hydrocarbon group is particularly preferably a methyl group). $R^1$ is preferably a hydrogen atom or a methyl group, and more preferably a hydrogen atom.

In the formula (F1), $R^2$ represents an ethylene group or a propylene group. When m is an integer of 2 or greater, the plurality of $R^2$ may be the same as or different from one another. When m is 2 or greater, it is preferable that at least one ethylene group be present. $R^2$ is preferably an ethylene group.

$R^3$ represents a C4-C10 divalent hydrocarbon group. Examples of such groups include alkylene groups such as butylene group; alkenylene groups; and arylene groups such as phenylene group. Of these, alkylene groups are preferable, and butylene group is more preferable. When n is an integer of 2 or greater, the plurality of $R^3$ may be the same as or different from one another.

$R^4$ represents a hydrogen atom or a C1-C30 monovalent hydrocarbon group. Examples of the monovalent hydrocarbon groups include linear, branched or cyclic, saturated or unsaturated aliphatic hydrocarbon groups, and aromatic hydrocarbon groups. Specific examples include methyl group, ethyl group, propyl group, butyl group, hexyl group, cyclohexyl group, phenyl group, octyl group, dodecyl group, octadecyl group and nonylphenyl group. $R^4$ is preferably a hydrogen atom or a methyl group, and more preferably a methyl group.

By virtue of $R^4$ being such a substituent as described above, the ether group-containing polymer (F) attains favorable hydrophilicity and imparts excellent antifouling properties to coating films that are obtained.

In the formula (F1), m is an integer of 1 to 50, and preferably an integer of 1 to 15.

In the formula (F1), n is an integer of 0 to 50, preferably an integer of 0 to 20, and more preferably 0.

In the present specification, two or more dissimilar repeating units described in parallel within [] may be repeated randomly, alternately or blockwise in any form and order. That is, for example, -[$X_3$-$Y_3$]- (wherein X and Y represent repeating units) may be a random sequence such as -XXYXYY-, an alternate sequence such as -XYXYXY-, or a blockwise sequence such as -XXXYYY- or -YYYXXX-.

In the formula (F1), X represents an ester bond (-C(=O)O-), an amide bond (-C(=O)NH-) or a single bond, and is preferably an ester bond (-C(=O)O-).

When X is an ester bond or an amide bond, it is preferable that the carbonyl carbon be bonded to the carbon atom to which $R^1$ is bonded.

Examples of the unsaturated monomers (f1) include 2-hydroxyethyl (meth)acrylate, 2-hydroxypropyl (meth)acrylate, 2-methoxyethyl (meth)acrylate, 2-methoxypropyl (meth)acrylate, polyethylene glycol mono (meth) acrylate, polypropylene glycol mono (meth) acrylate, poly(ethylene glycol-propylene glycol) mono(meth)acrylate, poly(ethylene glycol-butylene glycol) mono(meth)acrylate, methoxy polyethylene glycol mono(meth)acrylate, allyloxy poly(ethylene glycol-propylene glycol) mono(meth)acrylate, phenoxy polyethylene glycol-polypropylene glycol methacrylate, octoxy poly(ethylene glycol-propylene glycol) mono(meth)acrylate, dodecyloxy polyethylene glycol mono(meth)acrylate, octadecyloxy polyethylene glycol mono(meth)acrylate, nonylphenoxy polypropylene glycol acrylate, and ethylene glycol monoallyl ether. 2-Hydroxyethyl (meth)acrylate, 2-hydroxypropyl (meth)acrylate, 2-methoxyethyl (meth)acrylate, 2-methoxypropyl (meth)acrylate, and methoxy polyethylene glycol mono(meth)acrylate are preferable. 2-Methoxyethyl (meth)acrylate, 2-methoxypropyl (meth)acrylate, and methoxy polyethylene glycol mono(meth)acrylate are more preferable.

In the present specification, the term "(meth) acrylate" means "acrylate or methacrylate". Similar notations are understood in the similar manner.

Commercially available unsaturated monomers (f1) may be used. Examples thereof include NK Ester AM-90G (methoxy polyethylene glycol #400 acrylate), NK Ester AM-130G (methoxy polyethylene glycol #550 acrylate), NK Ester M-90G (methoxy polyethylene glycol #400 methacrylate) and NK Ester M-230G (methoxy polyethylene glycol #1000 methacrylate) manufactured by Shin-Nakamura Chemical Co., Ltd.; LIGHT ACRYLATE MTG-A (methoxy-triethylene glycol acrylate), LIGHT ACRYLATE EC-A (ethoxy-diethylene glycol acrylate), LIGHT ACRYLATE EHDG-AT (2-ethylhexyl-diethylene glycol acrylate), LIGHT ESTER HOA (N) (2-hydroxyethyl acrylate), LIGHT ESTER HO-250(N) (2-hydroxyethyl methacrylate), LIGHT ESTER HOP(N) (2-hydroxypropyl methacrylate) and LIGHT ESTER 041MA (methoxy polyethylene glycol methacrylate) manufactured by Kyoeisha Chemical Co., Ltd.; BLEMMER ANP-300 (nonylphenoxy polypropylene glycol acrylate) manufactured by NOF CORPORATION; SR504 (ethoxylated nonylphenyl acrylate) manufactured by Arkema Co., Ltd.; and BISCOAT #MTG (methoxy polyethylene glycol acrylate) manufactured by OSAKA ORGANIC CHEMICAL INDUSTRY LTD.

In the ether group-containing polymer (F), the content of the structural units derived from the unsaturated monomer (f1) is preferably 1 to 100 mass%, more preferably 3 to 80 mass%, still more preferably 5 to 70 mass%, and further preferably 10 to 50 mass%.

The proportion of the content (the mass) of the structural units derived from the unsaturated monomer (f1) in the ether group-containing polymer (F) may be regarded the same as the proportion of the amount (the mass) in which the unsaturated monomer (f1) is fed to the polymerization reaction.

In the present invention, the ether group-containing polymer (F) may be a homopolymer composed of structural units from a single kind of unsaturated monomer (f1), or may be a copolymer including structural units from two or more kinds of unsaturated monomers (f1).

In the present invention, the ether group-containing polymer (F) is preferably a copolymer which includes structural units from one or more kinds of unsaturated monomers (f1), and optionally further includes structural units from one or more kinds of additional unsaturated monomers (f2). A preferred additional unsaturated monomer (f2) is an unsaturated monomer (f21) represented by the following formula (F2).

[Chem. 5]

$$H_2C{=}CR^{41}—X—R^{42} \qquad \textbf{(F2)}$$

In the formula (F2), $R^{41}$ represents a hydrogen atom or a C1-C10 monovalent hydrocarbon group, $R^{42}$ represents a hydrogen atom or a C1-C50 monovalent hydrocarbon group, and X represents an ester bond, an amide bond or a single bond.

In the formula (F2), $R^{41}$ represents a hydrogen atom or a C1-C10 monovalent hydrocarbon group. Examples of such hydrocarbon groups include those described hereinabove as $R^1$ in the formula (F1). A hydrogen atom or a methyl group is preferable.

In the formula (F2), $R^{42}$ represents a hydrogen atom or a monovalent hydrocarbon group having 1 to 50 carbon atoms, or preferably 1 to 30 carbon atoms . Examples of such monovalent hydrocarbon groups include linear or branched hydrocarbon groups such as methyl group, ethyl group, propyl group, butyl group, pentyl group, hexyl group, octyl group, dodecyl group and octadecyl group; and cyclic hydrocarbon groups such as cyclohexyl group, phenyl group and benzyl group, with n-butyl group, isobutyl group and 2-ethylhexyl group being preferable.

In the formula (F2), X represents an ester bond (-C(=O)O-), an amide bond (-C(=O)NH-) or a single bond, and is preferably an ester bond.

When X is an ester bond or an amide bond, it is preferable that the carbonyl carbon be bonded to the carbon atom to which $R^{41}$ is bonded.

Examples of the unsaturated monomers (f21) include methyl (meth) acrylate, ethyl (meth) acrylate, propyl (meth) acrylate, isopropyl (meth)acrylate, n-butyl (meth)acrylate, isobutyl (meth)acrylate, tert-butyl (meth)acrylate, n-pentyl (meth)acrylate, hexyl (meth)acrylate, cyclohexyl (meth)acrylate, n-octyl (meth)acrylate, isooctyl (meth)acrylate, 2-ethylhexyl (meth)acrylate, 3,5,5-trimethylhexyl (meth)acrylate, lauryl (meth)acrylate, cetyl (meth)acrylate, stearyl

(meth)acrylate, isostearyl (meth)acrylate, phenyl (meth)acrylate and benzyl (meth)acrylate. It is preferable that the polymer include n-butyl (meth)acrylate, isobutyl (meth)acrylate or 2-ethylhexyl (meth)acrylate.

Another preferred additional unsaturated monomer (f2) is an organopolysiloxane group-containing unsaturated monomer (f22).

Commercially available organopolysiloxane group-containing unsaturated monomers (f22) may be used. Examples thereof include SILAPLANE TM-0701T (tris(trimethylsiloxy)silylpropyl methacrylate), SILAPLANE FM-0711 (methacrylic group-containing dimethylpolysiloxane, average molecular weight: 1,000) and SILAPLANE FM-0721 (methacrylic group-containing dimethylpolysiloxane, average molecular weight: 5,000) manufactured by JNC Corporation.

The coating composition can give antifouling coating films with enhanced antifouling properties when it contains the organopolysiloxane group-containing unsaturated monomer (f22) as the additional unsaturated monomer (f2). However, the addition of this monomer sometimes results in a decrease in the adhesion of the coating films with respect to foundation surfaces, and thus needs to be selected appropriately in accordance with the type of the foundation surface on which the antifouling coating film will be formed.

When the ether group-containing polymer (F) contains structural units derived from the additional monomer (f2), the content thereof, that is, the content of the structural units derived from the additional monomer (f2) in the ether group-containing polymer (F) is preferably not more than 99 mass%, more preferably not more than 97 mass%, still more preferably not more than 95 mass%, and further preferably not more than 90 mass%, and is preferably not less than 20 mass%, more preferably not less than 30 mass%, and still more preferably not less than 50 mass%.

In the present invention, from the points of view of the antifouling properties of antifouling coating films that will be formed and the viscosity, the weight average molecular weight (Mw) of the ether group-containing polymer (F) is preferably not less than 1,000, more preferably not less than 3,000, still more preferably not less than 5,000, and particularly preferably not less than 7,000, and is preferably not more than 150,000, more preferably not more than 100,000, still more preferably not more than 50,000, and particularly preferably not more than 30,000.

To ensure that antifouling coating films formed from the coating composition will attain enhanced antifouling properties and will maintain strength, the content of the ether group-containing polymer (F) in the antifouling coating composition is preferably not less than 0.1 mass%, more preferably not less than 0.5 mass%, and still more preferably not less than 2 mass%, and is preferably not more than 50 mass%, more preferably not more than 25 mass%, and still more preferably not more than 10 mass%.

To ensure that antifouling coating films formed from the coating composition will attain enhanced antifouling properties and will maintain strength, the content of the ether group-containing polymer (F) relative to the solids in the antifouling coating composition is preferably not less than 0.2 mass%, more preferably not less than 1 mass%, and still more preferably not less than 4 mass%, and is preferably not more than 80 mass%, more preferably not more than 50 mass%, and still more preferably not more than 20 mass%.

[Organosilicon crosslinking agents (G)]

The antifouling coating composition of the present invention may contain an organosilicon crosslinking agent (G) for the purpose of enhancing the curability and film strength of antifouling coating films.

The organosilicon crosslinking agent (G) is preferably a compound represented by the following formula (G1) and/or a partial condensate thereof.

$$R^{51}{}_{d}SiY_{(4-d)} \qquad (G1)$$

In the formula (G1), $R^{51}$ represents a C1-C6 hydrocarbon group, Y independently at each occurrence represents a hydrolyzable group, and d represents an integer of 0 to 2.

In the formula (G1), $R^{51}$ independently at each occurrence represents a C1-C6 hydrocarbon group. Examples thereof include linear or branched alkyl groups such as methyl group, ethyl group and propyl group, cyclic alkyl groups such as cyclohexyl group, alkenyl groups such as vinyl group, and aryl groups such as phenyl group. Of these, methyl group and ethyl group are preferable.

When d is 2, the plurality of $R^{51}$ may be the same as or different from one another.

In the formula (G1), Y independently at each occurrence represents a hydrolyzable group. Examples of the hydrolyzable groups include those hydrolyzable groups mentioned in the formula (A1) hereinabove. Of such groups, alkoxy groups and oxime groups are preferable, alkoxy groups are more preferable, and methoxy group and ethoxy group are still more preferable.

The letter d represents an integer of 0 to 2, and is preferably 0 in order to attain enhancements in the curability and film strength of antifouling coating films.

The organosilicon crosslinking agent (G) may be a commercial product. Examples of commercially available tetraethyl orthosilicates include "Ethyl Silicate 28" manufactured by Colcoat Co., Ltd., and "Ethyl Orthosilicate" manufactured by Tama Chemicals Co., Ltd. Examples of commercially available partial condensates of tetraethyl orthosilicates include "Silicate 40" manufactured by Tama Chemicals Co., Ltd., and "WACKER SILICATE TES 40 WN" manufactured by Wacker Asahikasei Silicone Co., Ltd. Examples of commercially available alkyltrialkoxysilanes include "KBM-13" manufactured by Shin-Etsu Chemical Co., Ltd.

When the antifouling coating composition of the present invention contains the organosilicon crosslinking agent (G), the content of the organosilicon crosslinking agent (G) relative to the solids in the paint composition is preferably 0.2 to 20 mass%, and more preferably 0.4 to 10 mass% in order to control the curing rate of coating films and also to enhance the film strength.

[Curing catalysts (H)]

The antifouling coating composition of the present invention may contain a curing catalyst (H) for the purposes of enhancing the curing rate of coating films and also improving the film strength.

Examples of the curing catalysts (H) include those curing catalysts described in JP-A-H04-106156.

Specific examples include tin carboxylates such as tin naphthenate and tin oleate;

tin compounds such as dibutyltin diacetate, dibutyltin acetoacetonate, dibutyltin dilaurate, dibutyltin dioleate, dibutyltin oxide, dibutyltin dimethoxide, dibutyltin dipentoate, dibutyltin dioctoate, dibutyltin dineodecanoate, dioctyltin dineodecanoate, bis(dibutyltin laurate)oxide, dibutyl bis(triethoxysiloxy)tin, bis(dibutyltin acetate)oxide, dibutyltin bis(ethyl maleate) and dioctyltin bis(ethyl maleate);

titanate esters or titanium chelate compounds such as tetraisopropoxytitanium, tetra-N-butoxytitanium, tetrakis(2-ethylhexoxy)titanium, dipropoxy bis(acetylacetonato)titanium and titanium isopropoxyoctyl glycol;

organometallic compounds such as zinc naphthenate, zinc stearate, zinc-2-ethyloctoate, iron-2-ethylhexoate, cobalt-2-ethylhexoate, manganese-2-ethylhexoate, cobalt naphthenate and alkoxyaluminum compounds; and

lower fatty acid salts of alkali metals such as potassium acetate, sodium acetate and lithium oxalate.

The curing catalyst (H) may be a commercial product. Examples of such commercial products include "NEOSTANN U-100" manufactured by NITTO KASEI CO., LTD., and "Gleck TL" manufactured by DIC Corporation.

When the antifouling coating composition of the present invention contains the curing catalyst (H), the content of the curing catalyst (H) relative to the solids in the coating composition is preferably not less than 0.001 mass%, and more preferably not less than 0.01 mass%, and is preferably not more than 10 mass%, and more preferably not more than 1 mass% in order to enhance the curing rate of coating films and also to attain a good balance between the curing rate and the pot life of the coating composition after its preparation.

[Dehydrating agent (I)]

The antifouling coating composition of the present invention may contain a dehydrating agent (I) for the purpose of enhancing the storage stability of the coating composition.

Examples of the dehydrating agents (I) include zeolites known as the general name "molecular sieves", porous alumina, ortho esters such as alkyl orthoformates, orthoboric acid, and isocyanates. The dehydrating agents may be used singly, or two or more may be used in combination.

When the coating composition of the invention contains the dehydrating agent (I), the content of the dehydrating agent (I) relative to the solids in the coating composition is preferably not less than 0.1 mass%, and more preferably not less than 0.5 mass%, and is preferably not more than 10 mass%, and more preferably not more than 5 mass% in order to attain enhancements in the storage stability of the coating composition.

[Additional coloring pigments (J)]

The antifouling coating composition of the present invention may contain an additional coloring pigment (J) other than the titanium oxide (C) and the inorganic filler (D) for the purpose of enhancing the design and visibility of the coating composition and coating films formed therefrom.

Examples of the additional coloring pigments (J) include inorganic coloring pigments such as carbon black, red oxide (red iron oxide) and yellow iron oxide, and organic coloring pigments such as Naphthol Red and Phthalocyanine Blue. The coloring pigments may further include various colorants such as dyes. The coloring pigments may be used singly, or two or more may be used in combination.

When the antifouling coating composition of the invention contains the additional coloring pigment (J), the content of the pigment (J) relative to the solids in the antifouling coating composition is preferably 0.5 to 20 mass%.

[Organic solvents (K)]

The antifouling coating composition of the present invention may contain an organic solvent (K) for the purpose of keeping low the viscosity of the coating composition to attain enhanced sprayability and thereby to improve application workability.
Examples of the organic solvents (K) include aromatic hydrocarbon organic solvents, aliphatic hydrocarbon organic solvents, alicyclic hydrocarbon organic solvents, ketone organic solvents and ester organic solvents. Of these, aromatic hydrocarbon organic solvents and ketone organic solvents are preferable.
Examples of the aromatic hydrocarbon organic solvents include toluene, xylene and mesitylene.
Examples of the aliphatic hydrocarbon organic solvents include pentane, hexane, heptane and octane.
Examples of the alicyclic hydrocarbon organic solvents include cyclohexane, methylcyclohexane and ethylcyclohexane.
Examples of the ketone organic solvents include acetyl acetone, acetone, methyl ethyl ketone, methyl isobutyl ketone and dimethyl carbonate.
Examples of the ester organic solvents include propylene glycol monomethyl ether acetate.
The organic solvents (K) may be used singly, or two or more may be used in combination.
When the antifouling coating composition of the invention contains the organic solvent (K), the content of the organic solvent (K) in the coating composition may be controlled appropriately in accordance with the desired viscosity of the coating composition. The content is preferably not less than 1 mass%, more preferably not less than 10 mass%, still more preferably not less than 15 mass%, and further preferably not less than 25 mass% of the composition. To avoid sagging during the application, the content is preferably not more than 70 mass%, and more preferably not more than 40 mass% of the composition.

[Silane coupling agents (L)]

The antifouling coating composition of the invention may contain a silane coupling agent (L) for the purpose of attaining enhanced adhesion with respect to a foundation surface.
For example, the silane coupling agent (L) is preferably a compound represented by the following formula (L1).
[Chem. 6]

$$(R^{21}O)_wR^{22}{}_{(3-w)}Si—R^{23}—Z \qquad (L1)$$

In the formula (L1), $R^{21}$ and $R^{22}$ independently at each occurrence represent a C1-C10 alkyl, alkenyl, aryl or alkyl halide group, with a methyl group or an ethyl group being preferable.
In the formula (L1), $R^{23}$ represents a C1-C20 divalent hydrocarbon group which may be interrupted with a group represented by -NR- (wherein R represents a hydrogen atom or a C1-C10 hydrocarbon group), an ether group (—O—), a thioether group (-S-), an ester group (—C(=O)—O—) or an amide group (—C(=O)—NR— wherein R represents a hydrogen atom or a C1-C10 hydrocarbon group). A C4-C11 alkylene group interrupted with -NR- is preferable.
In the formula (L1), Z represents a polar group, preferably an amino group, a glycidyl group, an isocyanate group, a thiol group, a hydrosilyl group or a (meth)acrylic group ($CH_2CHCOO$— or $CH_2C(CH_3)COO$—), and more preferably an amino group.
In the formula (L1), w is an integer of 2 or 3, and is preferably 3.
Examples of the silane coupling agents (L) include 3-(2-aminoethyl)aminopropyltrimethoxysilane, 3-aminopropyltrimethoxysilane, 3-aminopropyltriethoxysilane, 3-(2-(2-aminoethyl)aminoethyl)aminopropyltrimethoxysilane, 3-glycidoxypropyltrimethoxysilane, 3-isocyanatopropyltrimethoxysilane, 3-mercaptopropyltrimethoxysilane and N-phenyl-3-aminopropyltrimethoxysilane, and also include partial condensates of these compounds.
The silane coupling agents (L) may be used singly, or two or more may be used in combination.
When the antifouling coating composition of the invention contains the silane coupling agent (L), the content of the silane coupling agent (L) relative to the solids in the coating composition is preferably 0.01 to 10 mass%, and more preferably 0.05 to 2 mass% in order to attain enhanced adhesion of an antifouling coating film with respect to a substrate or an undercoating film.

[Additional antifouling agents (M)]

The antifouling coating composition of the present invention may contain an additional antifouling agent (M) other than the pyrithione salt (B) for the purpose of enhancing the antifouling properties of antifouling coating films formed therefrom.
Examples of the additional antifouling agents (M) include cuprous oxide, copper thiocyanate, copper, 4-bromo-2-(4-chlorophenyl)-5-(trifluoromethyl)-1H-pyrrole-3-carbonitrile (trivial name: tralopyril), 4,5-dichloro-2-n-octyl-4-isothiazolin-3-one, borane-nitrogenous base adducts (such as pyridine triphenylborane and 4-isopropylpyridine diphenylmethylborane), (+/-)-4-[1-(2,3-dimethylphenyl)ethyl]-1H-imidazole (trivial name: medetomidine), N,N-dimethyl-N'-(3,4-dichlorophenyl)urea, N-(2,4,6-trichlorophenyl)maleimide, 2-methylthio-4-tert-butylamino-6-cyclopropylamino-1,3,5-tr iazine, 2,4,5,6-tetrachloroisophthalonitrile, bisdimethyldithiocarbamoyl zinc ethylenebisdithiocarbamate, chloromethyl-n-octyl disulfide, N,N-dimethyl-N'-phenyl-(N'-fluorodichloromethylthio)sulfam ide, tetraalkylthiuram disulfide, zinc dimethyldithiocarbamate, zinc ethylenebisdithiocarbamate, 2,3-dichloro-N-(2',6'-diethylphenyl)maleimide and 2,3-dichloro-N-(2'-ethyl-6'-methylphenyl)maleimide. The additional antifouling agents may be used singly, or two or more may be used in combination.

In particular, cuprous oxide, copper thiocyanate, copper, tralopyril, 4,5-dichloro-2-n-octyl-4-isothiazolin-3-one, and borane-nitrogenous base adducts (such as pyridine triphenylborane and 4-isopropylpyridine diphenylmethylborane) are preferable for the reasons that the antifouling coating composition exhibits excellent storage stability and curability and can form antifouling coating films with superior antifouling properties.

When the antifouling coating composition of the invention contains the additional antifouling agent (M), the content of the additional antifouling agent (M) relative to the solids in the coating composition is preferably 0.05 to 50 mass%, and more preferably 1 to 30 mass% to attain enhancements in the antifouling properties of antifouling coating films.

[Anti-sagging/ anti-settling agents (N)]

The antifouling coating composition of the present invention may contain an anti-sagging/ anti-settling agent (N).

Examples of the anti-sagging/ anti-settling agents (N) include organic clay waxes (such as stearate salts, lecithin salts and alkylsulfonate salts of Al, Ca and Zn), organic waxes (such as polyethylene wax, oxidized polyethylene wax, amide wax, polyamide wax and hydrogenated castor oil wax), and mixtures of organic clay waxes and organic waxes.

The anti-sagging anti-settling agent (N) may be a commercial product. Examples thereof include "DISPARLON 305", "DISPARLON 4200-20" and "DISPARLON A630-20X" manufactured by Kusumoto Chemicals, Ltd.

When the antifouling coating composition of the invention contains the anti-sagging/ anti-settling agent (N), the content of the anti-sagging/ anti-settling agent (N) relative to the solids in the coating composition is preferably 0.01 to 10 mass%, and more preferably 0.1 to 3 mass%.

[Enzymes (O)]

The antifouling coating composition of the present invention may contain an enzyme (O) for the purpose of enhancing the antifouling properties of antifouling coating films formed therefrom.

Examples of the enzymes (O) include serine proteases, cysteine proteases, metalloproteinases, cellulases, hemicellulases, pectinases and glycosidases.

When the antifouling coating composition of the invention contains the enzyme (O), the content of the enzyme relative to the solids in the coating composition is preferably 0.0005 to 5 mass%, and more preferably 0.01 to 0.1 mass%.

<Kits of paint compositions>

The antifouling coating composition of the present invention may be a one-pack paint composed of a single component, or may be a multi-pack paint composed of two or more components.

The multi-pack paint is preferably such that the components (the liquids) each contain one or more ingredients, are packed separately, and are stored and kept in a container such as a can. The paint composition may be prepared by mixing the ingredients of the components at the time of coating operation.

The multi-pack paint is preferably composed of two components which are a "base agent component" that includes the curable organopolysiloxane (A) as the main binder resin of the paint composition, and a "curing agent component" that includes a compound such as the organosilicon crosslinking agent (G) capable of reacting with the curable polyorganosiloxane (A) to form a crosslinked structure. In consideration of factors such as the reactivity and denaturation of any ingredients, an additional component such as an "optional ingredient component (additive component)" including such ingredients may be added. That is, for example, the antifouling coating composition of the present invention may be a two-pack paint composed of a base agent component and a curing agent component, or may be a three-pack paint composed of a base agent component, a curing agent component and an additive component. The base agent component preferably further includes the pyrithione salt (B) and the titanium oxide (C).

[Antifouling coating films]

An antifouling coating film of the present invention is formed from the antifouling coating composition of the invention. Specifically, for example, the antifouling coating film may be formed by applying the antifouling coating composition of the invention onto a surface such as a substrate, and drying the wet film.
The antifouling coating composition of the invention may be applied by known methods such as brushing, roller coating and spraying.
The antifouling coating composition applied by such a method may be cured by, for example, being allowed to stand at 25°C for about 0.5 to 7 days, thereby forming a coating film. The curing of the antifouling coating composition may be performed while blowing air thereto at an elevated temperature.
To attain enhanced film strength, for example, the thickness of the antifouling coating film of the invention after curing is preferably about 100 to 2,000 μm. The antifouling coating film may be produced with such a thickness by applying the coating composition one or more times preferably with a thickness of 30 to 400 μm, and more preferably with a thickness of 50 to 300 μm per coating operation.

[Antifouling substrates and methods for production thereof]

An antifouling substrate according to the present invention includes a substrate and the antifouling coating film of the invention disposed on the substrate.
The antifouling substrate of the invention may be produced by any method without limitation. For example, it may be obtained by a production method including a step (1) of obtaining a coated substrate or an impregnated substrate by applying the antifouling coating composition of the invention to a substrate or by impregnating a substrate with the antifouling coating composition, and a step (2) of curing the coating composition that has been caused to coat or impregnate the substrate in the previous step.
In the step (1), the coating composition may be applied to the substrate by any of the application techniques described hereinabove. When the substrate is impregnated with the composition, the step is not particularly limited and may be performed by soaking the substrate into a sufficient amount of the coating composition enough to impregnate the substrate. The coating composition that has coated or impregnated the substrate may be cured in any manner without limitation. For example, the curing may be performed in the similar manner as the above-described antifouling coating film is produced.
Alternatively, the antifouling substrate of the invention may be obtained by a production method including a step (i) of forming a coating film by curing the antifouling coating composition of the invention, and a step (ii) of attaching the coating film to a substrate.
In the step (i), the coating film may be formed in any manner without limitation, and may be produced in the similar manner as the above-described antifouling coating film is produced.
In the step (ii), the coating film may be applied to a substrate in any manner without limitation and, for example, may be attached as described in JP-A-2013-129724.
Examples of the substrates include ships (hulls of ships such as large steel vessels including container vessels and tankers, fishing boats, FRP boats, wooden boats and yachts; new such ships and repaired such ships), fishery materials (such as ropes, fishing nets, fishing gears, floats and buoys), oil pipelines, headrace pipelines, water circulation pipes, diver suits, hydroscopes, oxygen cylinders, swimsuits, torpedoes, underwater structures such as water supply inlets and drains in thermal power plants and nuclear power plants, submarine cables, seawater utilization equipment (such as seawater pumps), mega-floats, coast roads, submarine tunnels, port facilities, and structures for various offshore construction works for building canals, waterways and the like.
Of the substrates, ships, underwater structures and fishery materials are preferable as the substrates. Ships, underwater structures and fishing gears are more preferable. Ships and underwater structures are still more preferable. Ships are particularly preferable.
The substrate may be already coated with an undercoating film (for example, an epoxy resin-based film, a urethane resin-based film or a silicone resin-based film), a treatment agent such as an antirust agent, or the antifouling coating film of the invention.

[Antifouling methods]

An antifouling method according to the present invention is characterized by using the antifouling coating film of the invention, more specifically, characterized in that an object (a substrate) to be prevented from fouling by aquatic organisms is coated with the antifouling coating film of the invention.
The coating film obtained by curing the antifouling coating composition of the invention has excellent antifouling properties and can protect the substrate from fouling by aquatic organisms.

[Methods for reducing deterioration in antifouling properties of antifouling coating films]

An aspect of the present invention provides a method for reducing the deterioration in antifouling properties of an antifouling coating film formed from an antifouling organopolysiloxane coating composition containing a pyrithione salt, particularly when exposed to conditions where the coating film is easily affected by sunlight.

Specifically, the method of the invention for reducing the deterioration in antifouling properties of an antifouling coating film controls the deterioration in antifouling properties of an antifouling coating film formed from an antifouling organopolysiloxane coating composition including a curable organopolysiloxane (A), a pyrithione salt (B) and titanium oxide (C), and is characterized in that the titanium oxide (C) is titanium oxide surface-treated with a compound comprising at least one selected from the group consisting of silicon compounds (C1), zirconium compounds (C2) and zinc compounds (C3).

In particular, the antifouling coating film (for example, antifouling coating film formed on a substrate) is preferably one which is placed under conditions where the coating film is exposed to sunlight and is expected to decrease antifouling properties.

The technical features used to carry out the method of the invention for reducing the deterioration in antifouling properties of an antifouling coating film, for example, the antifouling coating composition including the curable organopolysiloxane (A), the pyrithione salt (B), the titanium oxide (C) surface-treated with the specific compound, and optional additional ingredients, and the method for curing the composition (that is, the method for producing an antifouling coating film or an antifouling substrate) are the same as described hereinabove.

EXAMPLES

The present invention will be further described in detail based on Examples hereinbelow. However, it should be construed that the scope of the present invention is not limited to such Examples.

Hereinbelow, ingredients such as curable organopolysiloxane (A), pyrithione salt (B) and titanium oxide (C) are sometimes written as the "ingredient (A)", the "ingredient (B)", the "ingredient (C)", etc., respectively.

[Production of ether group-containing polymer (F) solutions]

(Production Example of ether group-containing polymer (FA) solution)

Reaction was performed at atmospheric pressure in a nitrogen atmosphere. A reaction vessel equipped with a stirrer, a reflux condenser, a thermometer, a nitrogen inlet tube and a dropping funnel was loaded with 42.86 g of methyl amyl ketone, which was then heated while performing stirring until the inside temperature reached 100°C. While keeping the temperature of methyl amyl ketone in the reaction vessel in the range of 100 °C ± 5°C, a mixture containing 20 g of NK Ester AM-90G, 80 g of isobutyl acrylate and 4 g of 2,2'-azobis(2-methylbutyronitrile) was added dropwise to the reaction vessel over a period of 4 hours. Thereafter, stirring was performed for 2 hours while keeping the temperature in the range described above. An ether group-containing polymer (FA) solution was thus obtained.

(Production Example of ether group-containing polymer (FB) solution)

Reaction was performed at atmospheric pressure in a nitrogen atmosphere. A reaction vessel equipped with a stirrer, a reflux condenser, a thermometer, a nitrogen inlet tube and a dropping funnel was loaded with 42.86 g of methyl amyl ketone, which was then heated while performing stirring until the inside temperature reached 100°C. While keeping the temperature of methyl amyl ketone in the reaction vessel in the range of 100 °C ± 5°C, a mixture containing 30 g of NK Ester AM-90G and 4 g of 2,2'-azobis(2-methylbutyronitrile), and 70 g of SILAPLANE FM-0711 were each added dropwise to the reaction vessel over a period of 4 hours. Thereafter, stirring was performed for 2 hours while keeping the temperature in the range described above. An ether group-containing polymer (FB) solution was thus obtained.

[Methods for evaluating polymers and polymer solutions]

(Solid content (mass%) of ether group-containing polymer (F) solution)

The polymer solution weighing 1.0 g ($X_1$) was kept in a thermostatic chamber at 1 atm and 125°C for 1 hour to remove volatiles. The weight ($X_2$ (g)) of the resultant nonvolatile residue was measured. The content (mass%) of the solids contained in the polymer solution was calculated using the following equation.

$$\text{Solid content (mass\%) of ether group-containing polymer (F) solution} = (X_2/X_1) \times 100$$

(Viscosity of polymer solution)

The viscosity (unit: mPa·s) of the polymer solution at a liquid temperature of 25°C was measured with an E-type viscometer (TV-25 manufactured by TOKI SANGYO CO., LTD.).

(Average molecular weight of polymer)

The weight average molecular weight (Mw) of the polymer was measured by GPC (gel permeation chromatography) under the following conditions.

GPC conditions

Apparatus: "HLC-8220GPC" manufactured by TOSOH CORPORATION

Columns: "TSKgel Super H2000" and "TSKgel Super H4000" (each manufactured by TOSOH CORPORATION, 6 mm in inner diameter/15 cm in length) were connected.

Eluent: tetrahydrofuran (THF)

Flow rate: 0.500 ml/min

Detector: RI

Column thermostatic chamber temperature: 40°C

Standards: polystyrenes

Sample preparation method: The polymer solution prepared in Production Example was diluted by the addition of THF and was filtered through a membrane filter. The filtrate was obtained as a GPC sample.

The unsaturated monomers used in the polymerization, and the characteristics of the ether group-containing polymers (F) and solutions thereof are described in Table 1.

[Table 1]

| | | | | Production Example | |
|---|---|---|---|---|---|
| | | | | 1 | 2 |
| | | | | (FA) | (FB) |
| Monomer mixture (parts by mass) | Unsaturated monomer (f1) | | NK Ester AM-90G (*1) | 20.0 | 30.0 |
| | Additional unsaturated monomers (f2) | (f21) | Isobutyl acrylate | 80.0 | |
| | | (f22) | SILAPLANE FM-0711 (*2) | | 70.0 |
| | Total | | | 100.0 | 100.0 |

(continued)

| | | Production Example | |
|---|---|---|---|
| | | 1 | 2 |
| | | (FA) | (FB) |
| Characteristics | Solid content (mass%) | 69.5 | 69.5 |
| | Viscosity (mPa·s) | 180 | < 50 |
| | Weight average molecular weight (Mw) | 11,800 | 9, 500 |
| *1: Methoxy polyethylene glycol acrylate (average number of polyethylene glycol repeating units = 9), manufactured by Shin-Nakamura Chemical Co., Ltd.<br>*2: Methacrylic group-containing dimethylpolysiloxane, average molecular weight: 1,000, manufactured by JNC Corporation. | | | |

[Paint compositions]

• Ingredients

The ingredients used in coating compositions are described in Tables 2 to 4.

The kneadates of a curable organopolysiloxane (A) and an inorganic filler (silica) (D) described in Table 2 were obtained by kneading the curable organopolysiloxane (A) and the inorganic filler (silica) (D) in the amounts shown in Table 2 by a known method.

Table 3 describes the metal elements and metalloid elements in compounds as surface treatment agents on titanium oxide which were detected at 0.1 mass% or more relative to the titanium oxide taken as 100 mass% according to analysis of the treated titanium oxide with a fluorescent X-ray analyzer (EDX-720 manufactured by Shimadzu Corporation).

[Table 2]

| | | Names of compounds | Data such as chemical formulae, characteristics, and manufacturers |
|---|---|---|---|
| (A) | Curable organopolysiloxanes | Silanol group-containing organopolysiloxane | $HO—[Si(CH_3)_2—O—]_n—H$ |
| | | | Weight average molecular weight = 28,500, viscosity = 2,100 mPa.s |
| | | Oximesilyl group-containing organopolysiloxane (*1) | $(MEKO)_2(CH_2=CH-)SiO-[Si(CH_3)_2—O—]_n-Si(CH=CH_2)(MEKO)_2$ |
| | | | Weight average molecular weight = 35,000, viscosity = 1,500 mPa·s |
| (D) | Silicas | Surface-untreated silica | "AEROSIL 200" manufactured by NIPPON AEROSIL CO., LTD. |
| | | Hydrophobized silica | "AEROSIL RX200" manufactured by NIPPON AEROSIL CO., LTD. |
| Kneadate (1) of (A) and (D) | | Kneadate of silanol group-containing organopolysiloxane and hydrophobized silica Amount of ingredient (D) based on 100 parts by mass of ingredient (A) = 10 parts by mass, viscosity = 5,000 mPa·s | |
| Kneadate (2) of (A) and (D) | | Kneadate of oximesilyl group-containing organopolysiloxane and surface-untreated silica Amount of ingredient (D) based on 100 parts by mass of ingredient (A) = 10 parts by mass, viscosity = 40 Pa·s | |

(continued)

| | Names of compounds | Data such as chemical formulae, characteristics, and manufacturers |
|---|---|---|
| Kneadate (3) of (A) and (D) | Kneadate of oximesilyl group-containing organopolysiloxane and hydrophobized silica Amount of ingredient (D) based on 100 parts by mass of ingredient (A) = 10 parts by mass, viscosity = 800 Pa·s | |
| ∗1: "MEKO" is an abbreviation of "2-methyl ethyl ketoxime group". | | |

[Table 3]

| | | Product names | Manufacturers | Major surface treatment agents |
|---|---|---|---|---|
| (C) | Titanium oxides | Tipaque PFC105 | ISHIHARA SANGYO KAISHA, LTD. | Si, Zr, Al |
| | | TITONE D-918 | SAKAI CHEMICAL INDUSTRY CO., LTD. | Si, Zr, Al |
| | | Ti-Pure TS-6200 | DuPont | Si, Al |
| | | Tipaque CR-97 | ISHIHARA SANGYO KAISHA, LTD. | Zr, Al |
| | | TITONE SR-1 | SAKAI CHEMICAL INDUSTRY CO., LTD. | Zn, Al |
| | | Ti-Pure R-931 | DuPont | Si, Al |
| | | Ti-Pure R-900 | DuPont | Al |
| | | TITONE D-918 | SAKAI CHEMICAL INDUSTRY CO., LTD. | Al |

[Table 4]

| | | Names of compounds | Data such as chemical formulae, characteristics, and manufacturers |
|---|---|---|---|
| (B) | Pyrithione salts | Copper pyrithione | "Copper Omadine Powder" manufactured by Arch UK Biocides Ltd. $Cu(-S-C_5H_4N-O-)_2$ |
| | | Zinc pyrithione | "Zinc Omadine Powder" manufactured by Arch UK Biocides Ltd. $Zn(-S-C_5H_4N-O-)_2$ |
| (E) | Silicone oils | Etherified organopolysiloxane | "KF-6020" manufactured by Shin-Etsu Chemical Co., Ltd. |
| | | Phenylated organopolysiloxane | "KF-50-1, 000 CS" manufactured by Shin-Etsu Chemical Co., Ltd. Phenylation ratio = 5%, viscosity = 1000 mPa·s |
| (G) | Organosilicon crosslinking agent | Organosilane partial hydrolyzate condensate | "WACKER SILICATE TES 40 WN" manufactured by Wacker Asahikasei Silicone Co., Ltd. $H_5C_2O-[Si(OC_2H_5)_2—O—]_t-C_2H_5$ |
| (H) | Curing catalyst | Dibutyltin dilaurate | "Gleck TL" manufactured by DIC Corporation |

(continued)

| | | Names of compounds | Data such as chemical formulae, characteristics, and manufacturers |
|---|---|---|---|
| (J) | Additional coloring pigments | Cobalt blue | "DAIPYROXIDE BLUE #9410" manufactured by Dainichiseika Color & Chemicals Mfg. Co., Ltd. $CoAl_2O_4$ |
| | | Yellow iron oxide | "TAROX LL-50" manufactured by Titan Kogyo, Ltd. $\alpha$-FeOOH |
| | | Bismuth yellow | "Lysopac Yellow 6616B" manufactured by CAPPELLE PIGMENTS N.V. Based on $BiVO_4$ |
| | | Carbon black | "Mitsubishi Carbon Black MA100" manufactured by Mitsubishi Chemical Corporation |
| (K) | Organic solvents | Xylene | - |
| | | Acetylacetone | - |
| (L) | Silane coupling agents | 3-(2-Aminoethylamino) propyltrimethoxysilane | "KBM-603" manufactured by Shin-Etsu Chemical Co., Ltd. |
| | | 3-Aminopropyltrimethoxysilane | "KBM-903" manufactured by Shin-Etsu Chemical Co., Ltd. |

(Production of paint compositions)

The ingredients were mixed and stirred according to the formulations (parts by mass) described in Tables 5 and 6 to give one-pack paint compositions composed of a base agent component alone, or three-pack paint compositions composed of a base agent component, a curing agent component and an additive component.

The three-pack paint compositions were applied in such a manner that the ingredients in the components were sufficiently stirred and mixed together uniformly with use of a disperser.

(Fabrication of coated test panels)

A silicone-based binder coating agent ("CMP BIOCLEAN TIE COAT" manufactured by CHUGOKU MARINE PAINTS, LTD.) was applied to a sandblasted panel coated with an epoxy-based anticorrosive paint ("BANNOH 500" manufactured by CHUGOKU MARINE PAINTS, LTD.) so that the thickness after drying (curing) would be 100 $\mu$m. The wet film was dried at 23°C for 6 hours to form an undercoating film.

Next, the coating composition of Example or Comparative Example was applied over the undercoating film at 23°C so that the thickness after drying (curing) would be 200 $\mu$m. The wet film was allowed to stand at 23°C for one week. A coated test panel was thus obtained.

(Evaluation of antifouling properties)

The test panels were immersed in seawater off Miyajima, Hiroshima, Japan, in such a manner that the antifouling coating film was perpendicular to the seawater surface and a portion of the test panel near the upper end intersected with the seawater surface. The test panels were located so that a sufficient amount of sunlight would be incident on the test surface and the antifouling coating film would be susceptible to sunlight influence. The surface of the antifouling coating film below at least 10 cm from the intersection with the seawater surface was visually inspected after 2 months, 5 months and 11 months to evaluate the area proportions of the regions fouled by marine organisms including slimes. The antifouling properties were rated based on the following classifications. The results are described in Tables 5 and 6.

(Fouling rating)

5: The area fouled by marine organisms was less than 1% of the entire test surface.
4: The area fouled by marine organisms was from 1% to less than 10% of the entire test surface.
3: The area fouled by marine organisms was from 10% to less than 30% of the entire test surface.

2: The area fouled by marine organisms was from 30% to less than 60% of the entire test surface.

1: The area fouled by marine organisms was 60% or more of the entire test surface.

[Table 5]

| Components of three-pack paint compositions, and ingredients thereof (parts by mass) | | | Examples | | | | | |
|---|---|---|---|---|---|---|---|---|
| | | | 1 | 2 | 3 | 4 | 5 | 6 |
| Base agent | (A) | Silanol group-containing organopolysiloxane | 30.0 | 30.0 | 30.0 | 30.0 | 30.0 | 30.0 |
| | (A) and (D) | Silanol group-containing organopolysiloxane /hydrophobized silica kneadate (1) | 25.0 | 25.0 | 25.0 | 25.0 | 25.0 | 25.0 |
| | (B) | Copper pyrithione | 5.0 | 5.0 | 5.0 | 5.0 | 5.0 | 5.0 |
| | | Zinc pyrithione | | | | | | |
| | (C) | Tipaque PFC105 (major surface treatment agents: Si, Zr, Al) | 5.0 | | | | | |
| | | TITONE D-918 (major surface treatment agents: Si, Zr, Al) | | 5.0 | | | | |
| | | Ti-Pure TS-6200 (major surface treatment agents: Si, Al) | | | 5.0 | | | |
| | | Tipaque CR-97 (major surface treatment agents: Zr, Al) | | | | 5.0 | | |
| | | TITONE SR-1 (major surface treatment agents: Zn, Al) | | | | | 5.0 | |
| | | Ti-Pure R-931 (major surface treatment agents: Si, Al) | | | | | | 5.0 |
| | | Ti-Pure R-900 (major surface treatment agent: Al) | | | | | | |
| | | TITONE D-918 (major surface treatment agent: Al) | | | | | | |
| | (F) | Ether-containing polymer (FA) solution (solids: 69.5 mass%) | 5.0 | 5.0 | 5.0 | 5.0 | 5.0 | 5.0 |
| | | Ether-containing polymer (FB) solution (solids: 69.5 mass%) | | | | | | |
| | (J) | Cobalt blue | | | | | | |
| | | Yellow iron oxide | | | | | | |
| | | Carbon black | | | | | | |
| | (K) | Xylene | 10.0 | 10.0 | 10.0 | 10.0 | 10.0 | 10.0 |
| | Subtotal of base agent component (parts by mass) | | 80.0 | 80.0 | 80.0 | 80.0 | 80.0 | 80.0 |
| Curing agent | (E) | Etherified organopolysiloxane | 0.5 | 0.5 | 0.5 | 0.5 | 0.5 | 0.5 |
| | | Phenylated organopolysiloxane | 7.0 | 7.0 | 7.0 | 7.0 | 7.0 | 7.0 |
| | (G) | Organosilane partial hydrolyzate condensate | 3.0 | 3.0 | 3.0 | 3.0 | 3.0 | 3.0 |
| | (H) | Dibutyltin dilaurate | 0.6 | 0.6 | 0.6 | 0.6 | 0.6 | 0.6 |
| | (K) | Acetylacetone | 5.4 | 5.4 | 5.4 | 5.4 | 5.4 | 5.4 |
| | | Xylene | 3.0 | 3.0 | 3.0 | 3.0 | 3.0 | 3.0 |
| | Subtotal of curing agent component (parts by mass) | | 19.5 | 19.5 | 19.5 | 19.5 | 19.5 | 19.5 |
| Additive | (K) | Xylene | 0.9 | 0.9 | 0.9 | 0.9 | 0.9 | 0.9 |
| | (L) | 3-(2-Aminoethylamino)propyltrimethoxysilane | 0.1 | 0.1 | 0.1 | 0.1 | 0.1 | 0.1 |
| | Subtotal of additive component (parts by mass) | | 1.0 | 1.0 | 1.0 | 1.0 | 1.0 | 1.0 |
| Total (parts by mass) | | | 100.5 | 100.5 | 100.5 | 100.5 | 100.5 | 100.5 |
| Results | Antifouling properties | After 2 months | 5 | 4 | 5 | 4 | 4 | 4 |
| | | After 5 months | 4 | 4 | 4 | 3 | 3 | 3 |
| | | After 11 months | 5 | 4 | 4 | 4 | 4 | 4 |

(Continued)

| Components of three-pack paint compositions, and ingredients thereof (parts by mass) | | | Examples | | | | |
|---|---|---|---|---|---|---|---|
| | | | 7 | 8 | 9 | 10 | 11 |
| Base agent | (A) | Silanol group-containing organopolysiloxane | 30.0 | 30.0 | 30.0 | 30.0 | 30.0 |
| | (A) and (D) | Silanol group-containing organopolysiloxane/hydrophobized silica kneadate (1) | 25.0 | 25.0 | 25.0 | 25.0 | 25.0 |
| | (B) | Copper pyrithione | 11.0 | | 5.0 | 5.0 | 3.0 |
| | | Zinc pyrithione | | 8.0 | | | 3.0 |
| | (C) | Tipaque PFC105 (major surface treatment agents: Si, Zr, Al) | 5.0 | 5.0 | 5.0 | 2.0 | 2.0 |
| | | TITONE D-918 (major surface treatment agents: Si, Zr, Al) | | | | | |
| | | Ti-Pure TS-6200 (major surface treatment agents: Si, Al) | | | | | |
| | | Tipaque CR-97 (major surface treatment agents: Zr, Al) | | | | | |
| | | TITONE SR-1 (major surface treatment agents: Zn, Al) | | | | | |
| | | Ti-Pure R-931 (major surface treatment agents: Si, Al) | | | | | |
| | | Ti-Pure R-900 (major surface treatment agent: Al) | | | | | |
| | | TITONE D-918 (major surface treatment agent: Al) | | | | | |
| | (F) | Ether-containing polymer (FA) solution (solids: 69.5 mass%) | 5.0 | 5.0 | | | 5.0 |
| | | Ether-containing polymer (FB) solution (solids: 69.5 mass%) | | | | 5.0 | |
| | (J) | Cobalt blue | | | | | 5.0 |
| | | Yellow iron oxide | | | | 2.0 | |
| | | Carbon black | | | | 0.1 | |
| | (K) | Xylene | 10.0 | 10.0 | 10.0 | 1.0 | 10.0 |
| | Subtotal of base agent component (parts by mass) | | 86.0 | 83.0 | 75.0 | 70.1 | 83.0 |
| Curing agent | (E) | Etherified organopolysiloxane | 0.5 | 0.5 | 7.0 | 0.5 | 0.5 |
| | | Phenylated organopolysiloxane | 7.0 | 7.0 | 7.0 | 7.0 | 7.0 |
| | (G) | Organosilane partial hydrolyzate condensate | 3.0 | 3.0 | 3.0 | 3.0 | 3.0 |
| | (H) | Dibutyltin dilaurate | 0.6 | 0.6 | 0.6 | 0.6 | 0.6 |
| | (K) | Acetylacetone | 5.4 | 5.4 | 5.4 | 5.4 | 5.4 |
| | | Xylene | 3.0 | 3.0 | 3.0 | 3.0 | 3.0 |
| | Subtotal of curing agent component (parts by mass) | | 19.5 | 19.5 | 26.0 | 19.5 | 19.5 |
| Additive | (K) | Xylene | 0.9 | 0.9 | 0.9 | 0.9 | 0.9 |
| | (L) | 3-(2-Aminoethylamino)propyltrimethoxysilane | 0.1 | 0.1 | 0.1 | 0.1 | 0.1 |
| | Subtotal of additive component (parts by mass) | | 1.0 | 1.0 | 1.0 | 1.0 | 1.0 |
| Total (parts by mass) | | | 106.5 | 103.5 | 102.0 | 90.6 | 103.5 |
| Results | Antifouling properties | After 2 months | 5 | 5 | 5 | 5 | 5 |
| | | After 5 months | 5 | 4 | 4 | 4 | 4 |
| | | After 11 months | 5 | 4 | 4 | 5 | 4 |

(Concluded)

| Components of three-pack paint compositions, and ingredients thereof (parts by mass) | | | Comparative Examples | | | |
|---|---|---|---|---|---|---|
| | | | 1 | 2 | 3 | 4 |
| Base agent | (A) | Silanol group-containing organopolysiloxane | 30.0 | 30.0 | 30.0 | 30.0 |
| | (A) and (D) | Silanol group-containing organopolysiloxane /hydrophobized silica kneadate (1) | 25.0 | 25.0 | 25.0 | 25.0 |
| | (B) | Copper pyrithione | 5.0 | 5.0 | 5.0 | |
| | | Zinc pyrithione | | | | |
| | (C) | Tipaque PFC105 (major surface treatment agents: Si, Zr, Al) | | | | 5.0 |
| | | TITONE D-918 (major surface treatment agents: Si, Zr, Al) | | | | |
| | | Ti-Pure TS-6200 (major surface treatment agents: Si, Al) | | | | |
| | | Tipaque CR-97 (major surface treatment agents: Zr, Al) | | | | |
| | | TITONE SR-1 (major surface treatment agents: Zn, Al) | | | | |
| | | Ti-Pure R-931 (major surface treatment agents: Si, Al) | | | | |
| | | Ti-Pure R-900 (major surface treatment agent: Al) | 5.0 | | | |
| | | TITONE D-918 (major surface treatment agent: Al) | | 5.0 | | |
| | (F) | Ether-containing polymer (FA) solution (solids: 69.5 mass%) | 5.0 | 5.0 | 5.0 | |
| | | Ether-containing polymer (FB) solution (solids: 69.5 mass%) | | | | |
| | (J) | Cobalt blue | | | | |
| | | Yellow iron oxide | | | | |
| | | Carbon black | | | | |
| | (K) | Xylene | 10.0 | 10.0 | 10.0 | 10.0 |
| | Subtotal of base agent component (parts by mass) | | 80.0 | 80.0 | 75.0 | 70.0 |
| Curing agent | (E) | Etherified organopolysiloxane | 0.5 | 0.5 | 0.5 | 7.0 |
| | | Phenylated organopolysiloxane | 7.0 | 7.0 | 7.0 | 7.0 |
| | (G) | Organosilane partial hydrolyzate condensate | 3.0 | 3.0 | 3.0 | 3.0 |
| | (H) | Dibutyltin dilaurate | 0.6 | 0.6 | 0.6 | 0.6 |
| | (K) | Acetylacetone | 5.4 | 5.4 | 5.4 | 5.4 |
| | | Xylene | 3.0 | 3.0 | 3.0 | 3.0 |
| | Subtotal of curing agent component (parts by mass) | | 19.5 | 19.5 | 19.5 | 26.0 |
| Additive | (K) | Xylene | 0.9 | 0.9 | 0.9 | 0.9 |
| | (L) | 3-(2-Aminoethylamino)propyltrimethoxysilane | 0.1 | 0.1 | 0.1 | 0.1 |
| | Subtotal of additive component (parts by mass) | | 1.0 | 1.0 | 1.0 | 1.0 |
| Total (parts by mass) | | | 100.5 | 100.5 | 95.5 | 97.0 |
| Results | Antifouling properties | After 2 months | 2 | 2 | 4 | 2 |
| | | After 5 months | 2 | 1 | 3 | 2 |
| | | After 11 months | 2 | 2 | 2 | 2 |

[Table 6]

| Components of one-pack paint compositions, and ingredients thereof (parts by mass) | | | Examples | | | | | Comparative Examples | |
|---|---|---|---|---|---|---|---|---|---|
| | | | 12 | 13 | 14 | 15 | 16 | 5 | 6 |
| Base agent | (A) and (D) | Oximesilyl group-containing organopolysiloxane /surface-untreated silica kneadate (2) | 40.0 | 40.0 | 40.0 | 40.0 | 40.0 | 40.0 | 40.0 |
| | | Oximesilyl group-containing organopolysiloxane /hydrophobized silica kneadate (3) | 15.0 | 15.0 | 15.0 | 15.0 | 15.0 | 15.0 | 15.0 |
| | (B) | Copper pyrithione | 5.0 | 5.0 | 5.0 | 2.0 | 8.0 | 5.0 | 5.0 |
| | | Zinc pyrithione | | | | | | | |
| | (C) | Tipaque PFC105 (major surface treatment agents: Si, Zr, Al) | 5.0 | | | 2.0 | 3.0 | | |
| | | TITONE D-918 (major surface treatment agents: Si, Zr, Al) | | 5.0 | | | | | |
| | | Ti-Pure TS-6200 (major surface treatment agents: Si, Al) | | | 5.0 | | | | |
| | | Ti-Pure R-900 (major surface treatment agent: Al) | | | | | | 5.0 | |
| | (E) | Etherified organopolysiloxane | | | | | | | |
| | | Phenylated organopolysiloxane | 15.0 | 15.0 | 15.0 | 20.0 | 7.0 | 15.0 | 15.0 |
| | (F) | Ether-containing polymer (FA) solution (solids: 69.5 mass%) | | | | | 1.0 | | |
| | (G) | Organosilane partial hydrolyzate condensate | 1.0 | 1.0 | 1.0 | 1.0 | 1.0 | 1.0 | 1.0 |
| | (J) | Cobalt blue | | | | | | | |
| | | Yellow iron oxide | | | | | 2.0 | | |
| | | Bismuth yellow | | | | 5.0 | | | |
| | | Carbon black | | | | | 0.2 | | |
| | (K) | Xylene | 18.8 | 18.8 | 18.8 | 14.8 | 22.6 | 18.8 | 15.0 |
| | (L) | 3-(2-Aminoethylamino) propyltrimethoxysilane | 0.1 | 0.1 | 0.1 | 0.1 | 0.1 | 0.1 | 0.1 |
| | | 3-Aminopropyltrimethoxysilane | 0.1 | 0.1 | 0.1 | 0.1 | 0.1 | 0.1 | 0.1 |
| | Total (parts by mass) | | 100.0 | 100.0 | 100.0 | 100.0 | 100.0 | 100.0 | 91.2 |
| Results | Antifouling properties | After 2 months | 5 | 5 | 5 | 4 | 5 | 2 | 4 |
| | | After 5 months | 4 | 3 | 3 | 3 | 4 | 2 | 3 |
| | | After 11 months | 4 | 4 | 4 | 4 | 5 | 2 | 2 |

As clear from the results of Examples and Comparative Examples, the coating compositions of the present invention can give antifouling coating films which exhibit good antifouling properties even near the seawater surface

where the coating films are susceptible to sunlight influence.

## Claims

1. An organopolysiloxane antifouling coating composition comprising:

   (A) a curable organopolysiloxane,
   (B) a pyrithione salt, and
   (C) titanium oxide,

   the titanium oxide (C) being surface-treated with a compound comprising at least one selected from the group consisting of silicon compounds (C1), zirconium compounds (C2) and zinc compounds (C3).

2. The antifouling coating composition according to Claim 1, wherein the titanium oxide (C) is surface-treated with compounds including both a silicon compound (C1) and a zirconium compound (C2).

3. The antifouling coating composition according to Claim 1 or 2, wherein the pyrithione salt (B) comprises copper pyrithione.

4. The antifouling coating composition according to any one of Claims 1 to 3, further comprising a silicone oil (E) and/or an ether group-containing polymer (F).

5. An antifouling coating film formed from the antifouling coating composition described in any one of Claims 1 to 4.

6. An antifouling substrate comprising a substrate and the antifouling coating film described in Claim 5 on the substrate.

7. The antifouling substrate according to Claim 6, wherein the substrate is a ship, an underwater structure or a fishery material.

8. A method for producing an antifouling substrate, comprising:

   (1) a step of obtaining a coated substrate or an impregnated substrate by applying the antifouling coating composition described in any one of Claims 1 to 4 to a substrate or by impregnating a substrate with the antifouling coating composition described in any one of Claims 1 to 4, and
   (2) a step of curing the coating composition by drying the coated substrate or the impregnated substrate.

9. A method for producing an antifouling substrate, comprising:

   (i) a step of forming a coating by curing the antifouling coating composition described in any one of Claims 1 to 4, and
   (ii) a step of attaching the coating film to a substrate.

10. An antifouling method comprising preventing a substrate from fouling by use of the antifouling coating film described in Claim 5.

11. A method for reducing deterioration in antifouling properties of an antifouling coating film formed from an antifouling coating composition comprising a curable organopolysiloxane (A), a pyrithione salt (B) and titanium oxide, the method comprising:

    forming the antifouling coating film from an antifouling coating composition comprising a curable organopolysiloxane (A), a pyrithione salt (B) and titanium oxide, and
    wherein the titanium oxide is titanium oxide (C) surface-treated with a compound comprising at least one selected from the group consisting of silicon compounds (C1), zirconium compounds (C2) and zinc compounds (C3).

**Patentansprüche**

1. Organopolysiloxan-Antifouling-Beschichtungszusammensetzung, umfassend:

   (A) ein härtbares Organopolysiloxan,
   (B) ein Pyrithionsalz und
   (C) Titanoxid,

   wobei das Titanoxid (C) mit einer Verbindung, umfassend mindestens eine, ausgewählt aus der Gruppe, bestehend aus Siliciumverbindungen (C1), Zirkoniumverbindungen (C2) und Zinkverbindungen (C3), oberflächenbehandelt ist.

2. Antifouling-Beschichtungszusammensetzung gemäß Anspruch 1, wobei das Titanoxid (C) mit Verbindungen, die sowohl eine Siliciumverbindung (C1) als auch eine Zirkoniumverbindung (C2) einschließen, oberflächenbehandelt ist.

3. Antifouling-Beschichtungszusammensetzung gemäß Anspruch 1 oder 2, wobei das Pyrithionsalz (B) ein Kupfer-Pyrithion umfasst.

4. Antifouling-Beschichtungszusammensetzung gemäß irgendeinem der Ansprüche 1 bis 3, ferner umfassend ein Silikonöl (E) und/oder ein Ethergruppe-haltiges Polymer (F).

5. Antifouling-Beschichtungsfilm, der aus der in irgendeinem der Ansprüche 1 bis 4 beschriebenen Antifouling-Beschichtungszusammensetzung gebildet ist.

6. Antifouling-Substrat, umfassend ein Substrat und den in Anspruch 5 beschriebenen Antifouling-Beschichtungsfilm auf dem Substrat.

7. Antifouling-Substrat gemäß Anspruch 6, wobei das Substrat ein Schiff, eine Unterwasserstruktur oder ein Fischereimaterial ist.

8. Verfahren zur Herstellung eines Antifouling-Substrats, umfassend:

   (1) einen Schritt zum Erhalten eines beschichteten Substrats oder eines imprägnierten Substrats durch Auftragen der in irgendeinem der Ansprüche 1 bis 4 beschriebenen Antifouling-Beschichtungszusammensetzung auf ein Substrat oder durch Imprägnieren eines Substrats mit der in irgendeinem der Ansprüche 1 bis 4 beschriebenen Antifouling-Beschichtungszusammensetzung und
   (2) einen Schritt zum Härten der Beschichtungszusammensetzung durch Trocknen des beschichteten Substrats oder des imprägnierten Substrats.

9. Verfahren zur Herstellung eines Antifouling-Substrats, umfassend:

   (i) einen Schritt zum Bilden einer Beschichtung durch Härten der in irgendeinem der Ansprüche 1 bis 4 beschriebenen Antifouling-Beschichtungszusammensetzung und
   (ii) einen Schritt zum Befestigen des Beschichtungsfilms an dem Substrat.

10. Antifouling-Verfahren, umfassend das Schützen eines Substrats vor dem Fouling durch Verwendung des in Anspruch 5 beschriebenen Antifouling-Beschichtungsfilms.

11. Verfahren zum Verringern einer Verschlechterung der Antifouling-Eigenschaften eines Antifouling-Beschichtungsfilms, der aus einer Antifouling-Beschichtungszusammensetzung, umfassend ein härtbares Organopolysiloxan (A), ein Pyrithionsalz (B) und Titanoxid, gebildet ist, wobei das Verfahren umfasst:

    Bilden des Antifouling-Beschichtungsfilms aus der Antifouling-Beschichtungszusammensetzung, umfassend ein härtbares Organopolysiloxan (A), ein Pyrithionsalz (B) und Titanoxid, und
    wobei das Titanoxid Titanoxid (C) ist, das mit einer Verbindung, umfassend mindestens eine, ausgewählt aus der Gruppe, bestehend aus Siliciumverbindungen (C1), Zirkoniumverbindungen (C2) und Zinkverbindungen (C3), oberflächenbehandelt ist.

## Revendications

1. Composition de revêtement antisalissure à base d'organopolysiloxane comprenant:

   (A) un organopolysiloxane durcissable,
   (B) un sel de pyrithione, et
   (C) du dioxyde de titane,

   le dioxyde de titane (C) étant traité en surface avec un composé comprenant au moins un élément choisi parmi le groupe consistant en composés de silicium (C1), composés de zirconium (C2) et composés de zinc (C3).

2. Composition de revêtement antisalissure selon la revendication 1, dans laquelle le dioxyde de titane (C) est traité en surface avec des composés incluant à la fois un composé de silicium (C1) et un composé de zirconium (C2).

3. Composition de revêtement antisalissure selon la revendication 1 ou 2, dans laquelle le sel de pyrithione (B) comprend de la pyrithione de cuivre.

4. Composition de revêtement antisalissure selon l'une quelconque des revendications 1 à 3, comprenant en outre une huile de silicone (E) et/ou un polymère contenant un groupe éther (F).

5. Film de revêtement antisalissure formé à partir de la composition de revêtement antisalissure décrite selon l'une quelconque des revendications 1 à 4.

6. Substrat antisalissure comprenant un substrat et le film de revêtement antisalissure décrit selon la revendication 5 sur le substrat.

7. Substrat antisalissure selon la revendication 6, dans lequel le substrat est un navire, une structure sous-marine ou un matériel de pêche.

8. Procédé de production d'un substrat antisalissure, comprenant :

   (1) une étape d'obtention d'un substrat revêtu ou d'un substrat imprégné en appliquant la composition de revêtement antisalissure décrite selon l'une quelconque des revendications 1 à 4 sur un substrat ou en imprégnant un substrat avec la composition de revêtement antisalissure décrite selon l'une quelconque des revendications 1 à 4, et
   (2) une étape de durcissement de la composition de revêtement en séchant le substrat revêtu ou le substrat imprégné.

9. Procédé de production d'un substrat antisalissure, comprenant :

   (i) une étape de formation d'un revêtement en durcissant la composition de revêtement antisalissure décrite selon l'une quelconque des revendications 1 à 4, et
   (ii) une étape de fixation du film de revêtement à un substrat.

10. Procédé antisalissure comprenant le fait d'empêcher un substrat de s'encrasser en utilisant le film de revêtement antisalissure décrit selon la revendication 5.

11. Procédé permettant de diminuer la détérioration des propriétés antisalissures d'un film de revêtement antisalissure formé à partir d'une composition de revêtement antisalissure comprenant un organopolysiloxane durcissable (A), un sel de pyrithione (B) et du dioxyde de titane, le procédé comprenant :

    la formation du film de revêtement antisalissure à partir d'une composition de revêtement antisalissure comprenant un organopolysiloxane durcissable (A), un sel de pyrithione (B) et du dioxyde de titane, et
    dans lequel le dioxyde de titane est le dioxyde de titane (C) traité en surface avec un composé comprenant au moins un élément choisi parmi le groupe consistant en composés de silicium (C1), composés de zirconium (C2) et composés de zinc (C3).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014077205 A
- JP 2001139816 A
- JP H0323221 A
- JP H0649388 A
- JP H06345438 A
- JP H07292276 A
- JP H07292277 A
- JP H0948931 A
- JP H09124968 A
- JP H10158015 A
- JP 2001002417 A
- JP 2004182908 A
- JP H04106156 A
- JP 2013129724 A